# EUROPÄISCHE PATENTSCHRIFT

(11) **EP 4 078 311 B1**
(45) Veröffentlichungstag und Bekanntmachung des Hinweises auf die Patenterteilung: **02.07.2025**
(21) Anmeldenummer: 20829864.6
(22) Anmeldetag: 15.12.2020
(51) Int. Cl.: G05B 19/427, B25J 9/16

(54) **HANDGERÄT ZUM TRAINIEREN MINDESTENS EINER BEWEGUNG UND MINDESTENS EINER TÄTIGKEIT EINER MASCHINE, SYSTEM UND VERFAHREN**
HAND-HELD DEVICE FOR TRAINING AT LEAST ONE MOVEMENT AND AT LEAST ONE ACTIVITY OF A MACHINE, SYSTEM AND METHOD
DISPOSITIF PORTATIF POUR ENTRAÎNER AU MOINS UN MOUVEMENT ET AU MOINS UNE ACTIVITÉ D'UNE MACHINE, SYSTÈME ET PROCÉDÉ

(30) Priorität: 17.12.2019 DE 202019107044 U
(43) Veröffentlichungstag der Anmeldung: 26.10.2022
(73) Patentinhaber: Wandelbots GmbH, 01159 Dresden (DE)
(72) Erfinder: JUDT, Paul Brian, 01099 Dresden (DE); PIECHNICK, Maria, 01326 Dresden (DE); SCHREIBER, Christoph-Philipp, 01187 Dresden (DE); PIECHNICK, Christian, 01326 Dresden (DE); FALKENBERG, Jan, 01277 Dresden (DE); WERNER, Sebastian, 04924 Kröbeln (DE); GROSSER, Martin, 01809 Heidenau (DE); PÜSCHEL, Georg, 01705 Freital (DE); WAGNER, Klaus Ignaz, 54518 Osann-Monzel (DE)
(74) Vertreter: Ehrler Patent
(86) Internationale Anmeldenummer: PCT/EP2020/086196
(87) Internationale Veröffentlichungsnummer: WO 2021/122580

(56) Entgegenhaltungen:
- WO-A1-03/099526
- WO-A1-2017/036520
- WO-A2-2007/096322
- WO-A2-2011/150440
- ES-A1- 2 668 930

## Beschreibung

Verschiedene Ausführungsbeispiele betreffen ein Handgerät zum Trainieren mindestens einer Bewegung und mindestens einer Tätigkeit einer Maschine, ein entsprechendes System und ein entsprechendes Verfahren.

Sowohl die Programmierung eines Industrieroboters als auch die Programmierung der zugehörigen Anlagensteuerung und/oder Werkzeugbestückung (auch als "Tooling" bezeichnet) ist herkömmlicherweise hersteller- und roboterabhängig. Die Programmierung erfolgt in der Regel in Form von Programmcode durch einen oder mehr als einen speziell ausgebildete Experten. Dies trifft derzeit noch für mehr als 96% der Anwendungen zu. Dabei schreibt ein Programmierer manuell den Programmcode, der den Roboter die Tätigkeit autonom durchführen lässt. Daher ist die Programmierung insbesondere für eine bahn-basierte oder punk-basierte Anwendung (z.B. Schweißen, Kleben, Lackieren) aufwändig und teuer.

Die Kosten machen eine Automatisierung mittels eines Industrieroboters (vereinfacht auch als Roboter bezeichnet) für kleine- und mittelständische Unternehmen wirtschaftlich unattraktiv, da diese üblicherweise keine Fertigung hoher Stückzahlen bei geringer Fertigungsvariabilität unterhalten, welche die Kosten aufwiegen könnte. Ähnliches gilt für andere Robotertypen. Für große Unternehmen kann hingegen die geringe Flexibilität der Programmierung unattraktiv sein. Eine Umrüstung der Programmierung ist zeitaufwändig, wodurch kürzere und unwirtschaftliche Produktionszyklen entstehen.

Die Komplexität der Programmierung erhöht sich aufgrund der Integration des Industrieroboters mit seinen vielfältigen Bestandteilen, wie etwa einem Endeffektor (z.B. einer Klebepistole), einem Sensorsystem (z.B. einer Kamera) und einem Steuersystem (z.B. einer speicherprogrammierbaren Steuerung - SPS).

Die Programmierung eines Industrieroboters kann alternativ oder zusätzlich mittels einer CAD-basierten Codegenerierung durch den Experten erfolgen. Dabei wird eine virtuelle Repräsentation der Realität (auch als virtuelle Welt bezeichnet) geschaffen und der Roboter in der virtuellen Welt programmiert. Dies ermöglicht neben der Simulation auch die einfachere Zugänglichkeit. Jedoch kann diese CAD-basierte Codegenerierung nicht ohne weiteres von einem technischen Laien umgesetzt werden. Darüber hinaus weicht die virtuelle Welt oft signifikant von der Realität ab. Bereits kleine Abweichungen können zu erheblichen Diskrepanzen bei der Arbeit des Roboters in der Realität führen. Aus diesem Grund wird der Programmcode, der mittels der Codegenerierung generiert wird, üblicherweise zusätzlich von einem Programmierer angepasst.

Als Alternative zur vollständig manuellen Programmierung wird herkömmlicherweise ein Anlernverfahren (auch als Trainieren bezeichnet) eingesetzt.

Für das Anlernverfahren kann der Roboter beispielsweise manuell gesteuert werden. Ein sensitiver Roboter (auch als Co-Bot bezeichnet) kann beispielsweise auch handgeführt werden. Mit beiden Mechanismen kann die Trajektorie (d.h. die Bahn auf der sich der Roboter bewegen soll) gezeigt werden. Über die Trajektorie hinausgehende Tätigkeiten, die der Roboter durchführen soll, bleiben allerdings weiterhin komplex und daher herkömmlicherweise von dem Anlernverfahren unberücksichtigt. Die Komplexität besteht beispielsweise in der Integration der vielfältigen Bestandteile des Roboters, wie des Endeffektors, der Sensoren und dem Steuerungssystem, in den auszuführenden Prozess, welche daher manuell programmiert werden muss.

Das Anlernverfahren kann alternativ oder zusätzlich über ein interaktives Eingabegerät erfolgen. Dazu wird herkömmlicherweise ein herstellerspezifisches Eingabegerät, wie beispielsweise eine 6d-Maus, verwendet. Analog zur manuellen Steuerung oder handgeführten Steuerung kann in diesem Fall ebenso nur die Trajektorie angelernt werden. Die Integration der verschiedenen Bestandteile des Roboters erfolgt daher manuell über Programmierung.

Das Anlernverfahren kann alternativ oder zusätzlich mittels einer Sensordatenverarbeitung erfolgen. Dazu werden verschiedene Erweiterungen für den Endeffektor eines dafür ausgerüsteten Roboters vorgesehen, die ein Sensorsystem (z.B. eine Kamera) direkt in die Robotersteuerung integrieren. Aufgrund der technischen Limitierungen ist dies bisher nur für eine Bestückungsanwendung (auch als Pick-and-Place Applikationen bezeichnet) anwendbar.

Im Allgemeinen ist herkömmlicherweise immer ein Anteil manueller Programmierung vorhanden. Daher haben diese herkömmlichen Methoden gemeinsam, dass die Umsetzung nicht vollständig von einem technischen Laien vorgenommen werden kann, wenn der manuelle Programmieranteil über dessen Fähigkeiten hinausgeht. Das liegt darin begründet, dass die Gesamtanwendung ein Zusammenspiel vielfältiger Teilprobleme ist (wie beispielsweise der Trajektorie, der Endeffektor-Ansteuerung, der Sensordatenverarbeitung und der Integration in die Prozesssteuerung). Einfache Anlernverfahren konzentrieren sich daher auf die Spezifikation der Trajektorie bzw. das Aufzeichnen von Bahnpunkten. Das Anlernverfahren mit Sensordatenverarbeitung basiert auf Sensoren, die direkt am Roboter angebracht sind. Jedoch ist der Sichtbereich durch den Endeffektor und Roboter häufig eingeschränkt. Darüber hinaus beeinträchtigen wechselnde Lichtverhältnisse oder Luftpartikel (z.B. beim Lackieren) die Sensoren am Roboter.

ES 2 668 930 A1 offenbart die Programmierung eines Roboters mit Hilfe eines Handheld-Geräts.

Gemäß verschiedenen Ausführungsformen werden ein Handgerät zum Trainieren mindestens einer Bewegung und mindestens einer Tätigkeit einer Maschine, ein entsprechendes System und ein entsprechendes Verfahren bereitgestellt, welche die Automatisierung eines Prozessablaufs (z.B. einer oder mehr als einer Tätigkeit dessen) erleichtern.

Gemäß verschiedenen Ausführungsformen werden Handgeräte nach Ansprüche 1 und 14 bereitgestellt.

Es zeigen
- Figur 1: ein Handgerät gemäß verschiedenen Ausführungsformen in einer schematischen Seitenansicht oder Querschnittsansicht;
- Figuren 2, 5, 7 bis 9: jeweils ein System gemäß verschiedenen Ausführungsformen in verschiedenen schematischen Ansichten;
- Figuren 3 und 4: jeweils ein Verfahren gemäß verschiedenen Ausführungsformen in verschiedenen schematischen Ansichten;
- Figur 6: eine Maschine gemäß verschiedenen Ausführungsformen in einem schematischen Aufbaudiagram;
- Figur 10: ein Handgerät gemäß verschiedenen Ausführungsformen in einem schematischen Aufbaudiagram;
- Figur 11: ein Verfahren gemäß verschiedenen Ausführungsformen in einen schematischen Ablaufdiagramm;
- Figur 12: ein System in einem Verfahren gemäß verschiedenen Ausführungsformen in einen Kommunikationsdiagram; und
- Figur 13: einen Trajektorie-Ermittlungsmechanismus des Systems in einem schematischen Kommunikationsdiagram.

In der folgenden ausführlichen Beschreibung wird auf die beigefügten Zeichnungen Bezug genommen, die Teil dieser bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsformen in einer Anzahl verschiedener Orientierungen positioniert werden können, dient die Richtungsterminologie zur Veranschaulichung und ist auf keinerlei Weise einschränkend. Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung werden die Begriffe "verbunden", "angeschlossen" sowie "gekoppelt" verwendet zum Beschreiben sowohl einer direkten als auch einer indirekten Verbindung (z.B. ohmsch und/oder elektrisch leitfähig, z.B. einer elektrisch leitfähigen Verbindung), eines direkten oder indirekten Anschlusses sowie einer direkten oder indirekten Kopplung. In den Figuren werden identische oder ähnliche Elemente mit identischen Bezugszeichen versehen, soweit dies zweckmäßig ist.

Gemäß verschiedenen Ausführungsformen kann der Begriff "gekoppelt" oder "Kopplung" im Sinne einer (z.B. mechanischen, hydrostatischen, thermischen und/oder elektrischen), z.B. direkten oder indirekten, Verbindung und/oder Wechselwirkung verstanden werden. Mehrere Elemente können beispielsweise entlang einer Wechselwirkungskette miteinander gekoppelt sein, entlang welcher die Wechselwirkung (z.B. ein Signal) übertragen werden kann. Beispielsweise können zwei miteinander gekoppelte Elemente eine Wechselwirkung miteinander austauschen, z.B. eine mechanische, hydrostatische, thermische und/oder elektrische Wechselwirkung. Gemäß verschiedenen Ausführungsformen kann "gekuppelt" im Sinne einer mechanischen (z.B. körperlichen bzw. physikalischen) Kopplung verstanden werden, z.B. mittels eines direkten körperlichen Kontakts. Eine Kupplung kann eingerichtet sein, eine mechanische Wechselwirkung (z.B. Kraft, Drehmoment, etc.) zu übertragen.

Ein hierin beschriebenes Netzwerk kann beispielsweise, nach Reichweite unterschieden, ein lokales Netzwerk (beispielsweise ein Local Area Network (LAN), ein Wireless LAN (WLAN), oder ein Personal Area Network (PAN), wie z.B. ein drahtloses PAN (WPAN), wie z.B. ein Bluetooth-Netzwerk) oder ein nichtlokale Netzwerk (wie beispielsweise ein Metropolitan Area Network (MAN), ein Wide Area Network (WAN) oder ein Global Area Network (GAN)) aufweisen oder daraus gebildet sein. Das Netzwerk kann beispielsweise nach Übertragungstyp unterschieden ein Funknetzwerk (z.B. Mobilfunknetz) oder ein kabelgebundenes Netzwerk aufweisen oder daraus gebildet sein. Das Netzwerk kann beispielsweise auch ein zelluläres Funknetzwerk (z.B. ein WLAN vom Typ IEEE 802.11 im Ad-hoc-Modus, ein Bluetooth-Netzwerk oder ein anderes zelluläres Mobilfunknetzwerk) aufweisen oder daraus gebildet sein. Das Netzwerk kann auch mehrere miteinander verbundene Sub-Netzwerke verschiedenen Typs aufweisen.

Die Übertragung einer Information (Informationsübertragung) kann gemäß verschiedenen Ausführungsformen gemäß einem Kommunikationsprotokoll (KP) erfolgen. Die Informationsübertragung kann aufweisen, eine Nachricht, welche die Information aufweist, gemäß dem Kommunikationsprotokoll zu erzeugen und/oder zu übermitteln. Das Kommunikationsprotokoll kann anschaulich eine Vereinbarung, nach der die Informationsübertragung zwischen zwei oder mehreren Parteien abläuft bezeichnen. In seiner einfachsten Form kann das Kommunikationsprotokoll definiert werden als eine Menge von Regeln, welche die Syntax, Semantik und Synchronisation der Informationsübertragung festlegen. Das oder die eingesetzten Kommunikationsprotokolle (z.B. ein oder mehrere Netzwerkprotokolle) können grundsätzlich beliebig ausgewählt werden und können (müssen aber nicht) gemäß dem OSI (Open System Interconnect)-Referenzmodell konfiguriert sein. In den jeweiligen Protokollschichten können ebenfalls beliebige Protokolle eingesetzt werden. So können beispielsweise die Protokolle gemäß Bluetooth oder anderen funkbasierten Kommunikationsprotokollen verwendet werden. So kann die Übermittlung einer Information mittels Bluetooth hierin aufweisen, eine Nachricht, die die Information aufweist, gemäß einem Bluetooth-Kommunikationsprotokollstapel zu erzeugen und/oder zu übermitteln. Die Bluetooth-Kommunikationsprotokollstapel können optional gemäß einem niedrig-Energie-Kommunikationsprotokollstapel (Low-Energy-Protokollstapel) eingerichtet sein, d.h. die Information kann über niedrig-Energie-Bluetooth übermittelt werden.

Im Folgenden werden verschiedene Schritte und Einzelheiten zu einem Verfahren beschrieben. Es kann verstanden werden, dass das Beschriebene (z.B. einzelne Schritte des Verfahrens) in Analogie mittels Hardware (wie z.B**.** eines hartverschalteten Schaltkreises) und/oder Software (z.B. Codesegmente oder einer ganzen Anwendung) implementiert werden kann. Beispielsweise kann eine Anwendung (auch als Programm bezeichnet) bereitgestellt sein oder werden, die entsprechende Codesegmente (z.B. Programmcode) aufweist, und die auf einem Prozessor und/oder mittels eines Schaltkreises, der den Prozessor aufweist, ausgeführt sein oder werden kann. Der Prozessor (oder der Schaltkreis) kann beispielsweise Teil eines Mobilfunkgeräts oder einer Rechenvorrichtung sein. Die Rechenvorrichtung kann beispielsweise eine Vielzahl von Prozessoren aufweisen, die zentral innerhalb eines physisch zusammenhängenden Verbunds angeordnet oder auch dezentral untereinander mittels eines (beispielsweise zellularen oder kabelgebundenen) Netzwerks verbunden sind. Auf dieselbe Weise können Codesegmente oder die Anwendung auf demselben Prozessor ausgeführt werden oder Teile davon auf mehrere Prozessoren verteilt werden, welche mittels des (beispielsweise zellularen oder kabelgebundenen) Netzwerks miteinander kommunizieren.

Der Begriff "Prozessor" kann als jede Art von Entität verstanden werden, die die Verarbeitung von Daten oder Signalen erlaubt. Die Daten oder Signale können beispielsweise gemäß zumindest einer (d.h. einer oder mehr als einer) spezifischen Funktion behandelt werden, die vom Prozessor ausgeführt wird. Ein Prozessor kann eine analoge Schaltung, eine digitale Schaltung, eine Mischsignalschaltung, eine Logikschaltung, einen Mikroprozessor, eine zentrale Verarbeitungseinheit (CPU), eine Grafikverarbeitungseinheit (GPU), einen digitalen Signalprozessor (DSP), eine programmierbare Gatter-Anordnung (FPGA), eine integrierte Schaltung oder eine beliebige Kombination davon aufweisen oder daraus gebildet sein. Jede andere Art der Implementierung der jeweiligen Funktionen, die nachstehend ausführlicher beschrieben werden, kann auch als Prozessor oder Logikschaltung verstanden werden, beispielsweise auch virtuelle Prozessoren (oder eine virtuelle Maschine) oder eine Vielzahl dezentraler Prozessoren, die beispielsweise mittels eines Netzwerks miteinander verbunden sind, beliebig räumlich verteilt sind und/oder beliebige Anteile an der Implementierung der jeweiligen Funktionen haben (z.B. Rechenlastverteilung unter den Prozessoren). Dasselbe gilt im Allgemeinen für eine anders implementierte Logik zur Implementierung der jeweiligen Funktionen. Es versteht sich, dass einer oder mehrere der hierin detailliert beschriebenen Verfahrensschritte von einem Prozessor ausgeführt (z.B. realisiert) werden können, durch eine oder mehrere spezifische Funktionen, die von dem Prozessor ausgeführt werden.

Der Begriff "System" kann als ein Satz interagierender Entitäten verstanden werden. Der Satz interagierender Entitäten kann beispielsweise zumindest eine mechanische Komponente, zumindest einen elektromechanischen Wandler (oder andere Arten von Stellgliedern), zumindest eine elektrische Komponente, zumindest eine Anweisung (z.B. in einem Speichermedium codiert), und/oder zumindest eine Steuervorrichtung aufweisen oder daraus gebildet sein. Mehrere kommunikativ miteinander verbundene Entitäten des Systems können beispielsweise mittels einer gemeinsamen Systemverwaltung des Systems verwaltet werden. Beispielsweise können die Entitäten (z.B. das Handgerät und/oder eine Handgerät-externe Vorrichtung) des Systems im System registriert sein oder werden, z.B. mittels der Systemverwaltung.

Der Begriff "Stellglied" (auch als Aktuator oder Aktor bezeichnet) kann als eine Komponente verstanden werden, die zum Beeinflussen eines Mechanismus oder eines Prozesses in Antwort auf ein Ansteuern eingerichtet ist. Der Aktuator kann von der Steuervorrichtung ausgegebene Anweisungen (das sogenannte Ansteuern) in mechanische Bewegungen bzw. Veränderungen physikalischer Größen wie Druck oder Temperatur umsetzen. Der Aktuator, z.B. ein elektromechanischer Umsetzer, kann zum Beispiel eingerichtet sein, in Antwort auf ein Ansteuern elektrische Energie in mechanische Energie (z.B. durch Bewegung) zu überführen.

Der Begriff "Steuervorrichtung" kann als jede Art einer Logik implementierenden Entität verstanden werden, die beispielsweise eine Verschaltung und/oder einen Prozessor aufweisen kann, welche Software ausführen kann, die in einem Speichermedium, in einer Firmware oder in einer Kombination davon gespeichert ist, und darauf basierend Anweisungen ausgeben kann. Die Steuervorrichtung kann beispielsweise mittels Codesegmenten (z.B. Software) konfiguriert sein, um den Betrieb eines Systems (z.B. seines Arbeitspunkts), z.B. einer Maschine oder einer Anlage, z.B. zumindest seiner kinematischen Kette, zu steuern. Der Arbeitspunkt kann den Punkt im Kennfeld oder auf der Kennlinie eines technischen Gerätes beschreiben, der aufgrund der Systemeigenschaften und einwirkenden äußeren Einflüsse und Parameter des Gerätes eingenommen wird. Der Arbeitspunkt kann anschaulich beschreiben, welchen Betriebszustand (d.h. Ist-Zustand) das Gerät aufweist. Der Arbeitspunkt ist zu unterscheiden von dem Arbeitsort (d.h. dem räumlichen Ort, an dem beispielsweise die Wirkung durch die Maschine eintritt).

Das Steuern kann verstanden werden als eine beabsichtigte Beeinflussung eines Systems. Dabei kann der Zustand des Systems gemäß einer Vorgabe verändert werden unter Verwendung eines Stellglieds. Regeln kann als Steuern verstanden werden, wobei zusätzlich einer Zustandsänderung des Systems durch Störungen entgegengewirkt wird. Anschaulich kann die Steuerung eine nach vorn gerichtete Steuerstrecke aufweisen und somit anschaulich eine Ablaufsteuerung implementieren, welche eine Eingangsgröße in eine Ausgangsgröße umsetzt. Die Steuerstrecke kann aber auch Teil eines Regelkreises sein, so dass eine Regelung implementiert wird. Die Regelung weist im Gegensatz zu der reinen Vorwärts-Ablaufsteuerung eine fortlaufende Einflussnahme der Ausgangsgröße auf die Eingangsgröße auf, welche durch den Regelkreis bewirkt wird (Rückführung).

Als Prozesstätigkeit (vereinfacht auch als Tätigkeit bezeichnet) kann die Summe aller Vorgänge (z.B. eine zeitliche Folge von gesteuerten Ereignissen) verstanden werden, die eine vordefinierte Prozessaufgabe erfüllen. Die Prozesstätigkeit kann optional in Teilprozesse zerlegt werden, von denen jeder Teilprozess zumindest einen der Vorgänge berücksichtigt. Ein Teilprozess der Prozesstätigkeit kann eine Teilaufgabe (d.h. einen Teil der Prozessaufgabe) oder die ganze Prozessaufgabe erfüllen. Mehrere Teilprozesse können, je nach Art der Prozesstätigkeit, ineinandergreifen und/oder aufeinander aufbauen, z.B. in einer strikten Reihenfolge erfolgen, und/oder unabhängig voneinander sein, z.B. vertauschbar sein.

Anschaulich kann für jeden der Teilprozesse ein Vorgang (z.B. ein Schleifvorgang) und ein Ort des Vorgangs berücksichtigt werden, welche zusammen den Teilprozess beschreiben. Somit kann berücksichtigt werden, welche Handlung an welcher Stelle des Werkstücks (dem sogenannten Arbeitsort) durchzuführen ist, z.B. wo das Werkstück auf welche Weise bearbeitet werden soll. Zum Erfüllen der Prozessaufgabe kann eine Bewegung der Maschine erfolgen, beispielsweise mittels Stellens der kinematischen Kette der Maschine und/oder Verlagerns der Maschine. Es können beispielsweise auch kleinere Bewegungen der Maschine erfolgen, bei denen die Position des Endeffektors und/oder der Roboterarm selbst ortsfest verbleiben und nur das Werkzeug der Maschine bewegt wird. Beispielsweise kann ein Bohrer als Werkzeug der Maschine dem fortschreitenden Materialabtrag am Arbeitsort nachgeführt werden, so dass der Bohrer der Maschine in das Bohrloch hinein bewegt wird.

Einem Teilprozess kann dazu zumindest ein Vektor des Vorgangs (z.B. eines Schleifvorgangs) zugeordnet sein. Dasselbe kann in Analogie für eine Vielzahl Teilprozesse bzw. mehrere Vorgänge pro Teilprozess gelten. Als Vektor kann allgemein ein Element eines Vektorraumes verstanden werden, der nicht notwendigerweise nur räumlich oder nur dreidimensional sein muss. Der Vektor kann im Allgemeinen einander zugeordnete Parameter eines Parametersatzes der Prozesstätigkeit aufweisen, z.B. Prozessparameter, Ortsparameter oder Eingabedaten. Die Parameter des Parametersatzes können aber auch anders als mittels eines Vektors formuliert sein. Allgemeiner gesprochen kann das für den Vektor (bzw. dessen Komponenten) Beschriebene in Analogie für einen allgemeiner formulierten Parametersatzes gelten.

Der Vektor kann zumindest eine Position, deren Änderung, eine räumliche Verteilung und/oder zumindest eine Richtung des Vorgangs definieren. Die hierin vereinfacht mittels eines Vektors beschriebenen räumlichen Angaben (z.B. über die Prozesstätigkeit) können auch komplexer oder detaillierter sein und werden hierin allgemeiner als räumliche Information bezeichnet. Optional kann der räumlichen Information eine zeitliche Information (z.B. über die Prozesstätigkeit) zugeordnet sein, welche z.B. die Dauer, den Beginn, die Beendigung und/oder einen Takt des Vorgangs definiert. Die zeitliche Information kann in einem einfachen Beispiel auch nur die Vorgänge chronologisch ordnen, insofern dies erwünscht ist.

Wird die Prozesstätigkeit von einem handgeführtem Arbeitsgerät durchgeführt, kann die Prozesstätigkeit die Summe an Arbeitsvorgängen, die räumliche Information die räumliche Abfolge der Arbeitsvorgänge und die optionale zeitliche Information die Chronologie der Arbeitsvorgänge beschreiben, die mittels des Arbeitsgeräts durchgeführt werden, um die entsprechende Wirkung auf ein Werkstück zur Erreichung der Prozessaufgabe bereitzustellen. Die entsprechende räumliche Information kann beschreiben, wo (d.h. mit welcher räumlichen Verteilung) und/oder mit welcher Richtung die Wirkung bereitgestellt werden soll, d.h. in welcher dazu korrespondierenden räumlichen Lage (d.h. Position und/oder Ausrichtung) sich das Arbeitsgerät dazu befindet.

Diese Informationen über die Prozesstätigkeit (auch als Prozessinformationen bezeichnet), d.h. der Typ der Tätigkeit, die räumliche Information und die optionale zeitliche Information, können ebenso mittels des hierin beschriebenen Handgeräts bereitgestellt und/oder aufgezeichnet werden. An das Handgerät wird dazu ein Wechselaufsatz angekuppelt, der gemäß dem Typ der Tätigkeit eingerichtet ist. Das Handgerät kann dabei in analoger Weise zu dem Arbeitsgerät handgeführt (d.h. von einer Person händisch) geführt werden, so als würde der Arbeitsvorgang tatsächlich mittels des Wechselaufsatzes stattfinden. Im Unterschied zu dem Arbeitsgerät ist das Handgerät allerdings mit elektrischen Bauteilen (z.B. Sensoren, Schnittstellen, Transmitter, usw.) ausgestattet, die es ermöglichen, die Prozessinformationen aufzuzeichnen und als Trainingsdaten bereitzustellen. Die Handhabung des Handgeräts kann dabei reflektieren, auf welche Weise das Arbeitsgerät beim Durchführen eines Prozessablaufs geführt und/oder betätigt wird, z.B. wie es gehalten, wie stark angepresst, und/oder wie lange ein Arbeitsvorgang durchgeführt wird. Das Aufzeichnen der Trainingsdaten kann beispielsweise mittels einer lokalen Rechenanlage oder delokalisiert (z.B. in einer Cloud) erfolgen.

Als Modell kann eine datenbasierte (z.B. digitale und/oder virtuelle) Repräsentation eines Originals verstanden werden, z.B. eines körperlichen Objekts (z.B. einer Maschine) oder eines Vorgangs (z.B. eines Steuervorgangs oder eines Prozessablaufs). Zum Bilden des Modells (die sogenannte Modellbildung, d.h. die Abbildung des Originals auf das Modell) kann das Original abstrahiert, parametrisiert und/oder vereinfacht werden. Das Modell kann beispielsweise körperliche Informationen (z.B. Länge, Abstand, Gewicht, Volumen, Zusammensetzung, usw.), bewegungsbezogene Informationen (z.B. Position, Ausrichtung, Bewegungsrichtung, Beschleunigung, Bewegungsgeschwindigkeit, usw.), logische Informationen (Verknüpfungen, Reihenfolge, Kopplungen, Wechselbeziehungen, Abhängigkeiten, usw.), zeitbezogene Informationen (z.B. Zeit, Gesamtdauer, Häufigkeit, Periodendauer, usw.) und/oder funktionelle Informationen (z.B. Stromstärke, Wirkung, Kennfeld oder Kennlinie, Arbeitspunkt-Raum, Kraft, Freiheitsgrad, usw.) über das Original aufweisen.

Ein Steuerungsmodell kann dementsprechend eine formale Darstellung einer automatisierten Ansteuerung bezeichnen. Das Steuerungsmodell kann eine Vielzahl von Anweisungen zur Ansteuerung (z.B. um die Maschine in einen Arbeitspunkt zu bringen) aufweisen und ferner Kriterien, deren Erfüllung die diesen zugeordnete Anweisung auslöst, beendet oder aufrechterhält. Ferner kann das Steuerungsmodell eine Steuerungslogik aufweisen, welche mehrere Kriterien und/oder mehrere Anweisungen logisch miteinander verknüpft, und/oder welche einen Ablauf (z.B. einen Ablaufplan) implementiert, gemäß dem die Ansteuerung erfolgt. Aus dem Weg zu dem Steuerungsmodell kann optional als Zwischenschritt ein maschinentypspezifisches Modell ermittelt werden, welches einen Maschinentyp (d.h. einen Typ baugleicher Maschinen) repräsentiert. Bei der Abbildung des maschinentypspezifischen Modells auf das Steuerungsmodell können typspezifische Abweichungen der Maschinen eines Typs untereinander berücksichtigt werden (auch als Deltabildung bezeichnet).

In analoger Weise kann ein Prozessmodell eine formale Darstellung eines Prozessablaufs bezeichnen. Das Prozessmodell kann eine Vielzahl von Verknüpfungen zwischen einer Prozesstätigkeit und der entsprechenden räumlichen Information aufweisen und den Prozesstätigkeiten optional entsprechende Prozesssituationen zuordnen, welche beispielsweise bei der Prozesstätigkeit vorliegen, diese bedingen oder beenden. Ferner kann das Prozessmodell eine Prozesslogik aufweisen, welche mehrere Prozesssituationen und/oder mehrere Teilprozesse logisch miteinander verknüpft, und/oder welche einen Ablauf (z.B. einen Ablaufplan) implementiert, gemäß dem die Prozesstätigkeit erfolgt. Im Allgemeinen kann ein Ablaufplan zumindest Verzweigungen, Sprünge und/oder Schleifen aufweisen. Das Vorliegen oder Fehlen einer Prozesssituation kann im Allgemeinen mittels zumindest eines Kriteriums repräsentiert werden, welches beispielsweise bei Vorliegen bzw. Fehlen der Prozesssituation erfüllt ist.

Ein Abbilden kann das Überführen von Elementen einer Ausgangsmenge (auch als Urbild bezeichnet) in eine Zielmenge aufweisen, wobei die Elemente der Zielmenge dann das Abbild (Abbildung) des Urbilds sind. Das Abbilden kann jedem Element des Urbilds zumindest ein Element der Abbildung zuordnen. Das Urbild muss nicht notwendigerweise alle verfügbaren Elemente aufweisen, sondern kann auch eine anwendungsspezifische Auswahl daraus sein. Das Abbilden kann aufweisen, auf die Elemente der Ausgangsmenge beispielsweise Operatoren, Transformationen und/oder Verknüpfungen anzuwenden. Die Elemente können im Allgemeinen aufweisen: logische Zusammenhänge, Verknüpfungen, Informationen, Eigenschaften, Koordinaten oder das zugehörige Koordinatensystem, mathematische Objekte (wie Formeln oder Zahlen), Vorgänge, Tätigkeiten, usw.

Ein Codegenerator kann als Computerprogramm verstanden werden, welches eingerichtet ist, ein Modell, das z.B. in einer Modellierungssprache vorliegt, in eine Programmiersprache zu überführen, z.B. der Programmiersprache der Steuervorrichtung der Maschine. Alternativ oder zusätzlich zu der Modellierungssprache, z.B. einer vereinheitlichten Modellierungssprache (UML), kann das Modell aber auch in einer Auszeichnungssprache, einem Struktogramm, einer Entscheidungstabelle oder einer anderen formalen Sprache vorliegen. Der Codegenerator erzeugt Codesegmente (auch als Codegenerierung bezeichnet), die mit anderen optionalen Programmteilen zu einem Programm verbunden werden können.

Als räumliche Lage kann hierin eine räumliche Information über eine Ausrichtung und/oder Position eines Objekts verstanden werden. Die Position kann anschaulich den Ort (z.B. einen Punkt) im Raum und die Ausrichtung die jeweilige Orientierung (z.B. eine Richtung) eines Objekts relativ zu dem Raum beschreiben. Als Trajektorie kann eine Aneinanderreihung von räumlichen Lagen verstanden werden, die nacheinander von einem Objekt eingenommenen werden. Die räumliche Lage kann optional zeitabhängig (d.h. bewegungsbezogen, dann auch als Bewegung bezeichnet) sein, gemäß einer Taktung oder Geschwindigkeit, so dass eine Bewegung entlang der Trajektorie berücksichtigt wird. In Analogie kann die Bewegung optional zeitabhängig sein, so dass eine Beschleunigung entlang der Trajektorie berücksichtigt wird. Im Allgemeinen kann die räumliche Lage oder eine andere räumliche Information im dreidimensionalen Raum mittels kartesischer Koordinaten beschrieben werden. Es kann aber auch jedes andere Koordinatensystem verwendet werden, z.B. Zylinderkoordinaten oder auch der sogenannte Jointspace (auch als maschinenspezifisches Koordinatensystem bezeichnet), welches zum eindeutigen Beschreiben der räumlichen Information geeignet ist. Das maschinenspezifische Koordinatensystem kann auf die kinematische Kette der Maschine bezogen sein und für jeden Freiheitsgrad der kinematischen Kette eine Dimension aufweisen. Dies ermöglicht es, nicht nur die Position des Endeffektors im Raum sondern darüber hinaus auch den Zustand jedes Glieds (z.B. Gelenks oder eines anderen Verbindungsglieds) der kinematischen Kette darzustellen, so dass eine präzisere Ansteuerung der Maschine ermöglicht wird. Anschaulich kann das maschinenspezifische Koordinatensystem eine Vielzahl ineinander verschachtelter Koordinatensysteme aufweisen, von denen jedes der verschachtelten Koordinatensysteme die Freiheitsgrade (z.B. bis zu 6 Freiheitsgrade, aufweisend bis zu 3 Rotationsfreiheitsgrade und/oder bis zu 3 Translationsfreiheitsgrade) eines Glieds der kinematischen Kette berücksichtigt.

Gemäß verschiedenen Ausführungsformen werden ein Handgerät (zum Trainieren mindestens einer Bewegung und mindestens einer Tätigkeit) einer Maschine, ein entsprechendes System und ein entsprechendes Verfahren bereitgestellt, welche das Anlernen (auch als Trainieren bezeichnet) einer Maschine erleichtern. Beispielsweise kann die Erzeugung eines vollintegrierten Programmcodes erfolgen, der eingerichtet ist, wenn von einem Prozessor der Maschine ausgeführt, die Tätigkeit mittels der Maschine autark auszuführen. Beispielsweise kann das Trainieren (bis hin zur Erzeugung des Programmcodes) besonders schnell erfolgen, z.B. indem die Tätigkeit manuell (d.h. von einer Person) mittels des Handgeräts vorgeführt wird. Beispielsweise kann unkompliziert und schnell zwischen verschiedenen Tätigkeiten gewechselt werden, z.B. indem der an das Handgerät gekuppelte Wechselaufsatz ausgetauscht wird oder zwischen den Werkzeugen eines Wechselaufsatzes gewechselt wird. Beispielsweise können verschiedene Typen von Maschinen mittels desselben Systems angelernt werden, z.B. indem als Zwischenschritt ein plattformunabhängiges Prozessmodell ermittelt wird. Beispielsweise kann das Anlernen besonders kostensparend sein, z.B. da weniger Programmierer benötigt werden, um den Programmcode zu bilden. Beispielsweise können verschiedene Wechselaufsätze derselben Tätigkeit zugeordnet sein. Es können aber auch mehrere Tätigkeiten genau einem Wechselaufsatz zugeordnet sein.

Gemäß verschiedenen Ausführungsformen kann das Handgerät das Aufzeichnen von Daten, welche die Bewegung und/oder die mindestens einer Tätigkeit der Maschine repräsentieren, frei im Raum ermöglichen, z.B. ohne einen (z.B. physischen oder virtuellen) Fixpunkt und/oder lagernde Achsen. Beispielsweise kann sich das Handgerät frei im Raum bewegen lassen, um so die anzulernende Tätigkeit, beispielweise an einem Werkstück, durchzuführen. Die kann beispielsweise erreicht werden, indem das Handgerät frei ist von einer Aufhängung (d.h. Lagerung) an einen oder mehr als einer physischen Achse.

Dies ermöglicht es, den Trainingsraum, in dem das Handgerät zum Trainieren bewegt werden kann, zu vergrößern, so dass beispielsweise kaum oder keine Einschränkung des Trainingsraums (zumindest durch das Handgerät selbst) verbleibt. Beispielsweise kann das Handgerät über-Kopf, liegend oder in andere Positionen einer Person von dieser gehandhabt werden (z.B. nur einhändig oder zweihändig). Dies erleichtert beispielsweise dessen Handhabung in verbauten Arbeitsräumen.

Beispielsweise kann das Handgerät unabhängig von der Maschine bewegt werden, d.h. beispielsweise frei sein von einer Kupplung mit der Maschine (z.B. nicht mit dieser gekuppelt sein). Eine kommunikative Kopplung zwischen der Maschine und dem Handgerät kann optional vorhanden sein, z.B. mittels eines austauschbaren Kabels oder drahtlos. Alternativ oder zusätzlich kann das Handgerät frei sein von einer Gelenkkupplung oder einem anderen Lager, welches beispielsweise mit der Maschine gekuppelt ist.

Das Aufzeichnen von Daten, welche die Bewegung und/oder die mindestens einer Tätigkeit der Maschine repräsentieren, kann beispielsweise in einem Koordinatensystem erfolgen, welches unabhängig ist von der Maschine, die beispielsweise trainiert werden soll. Das Handgerät und/oder dessen Bewegung bzw. das Aufzeichnen der Daten können beispielsweise unabhängig sein von der Maschine (z.B. deren Arbeitsbereich, deren Referenzpunkt bzw. Maschinenkoordinatensystem und/oder deren Basis). Der Referenzpunkt (auch als Tool Center Point, TCP, bezeichnet) kann beispielsweise eine fest definierte Koordinate im Maschinenkoordinatensystem sein.

Mittels des Systems sind Trajektorien mit beliebiger Anzahl von Wegpunkten ermittelbar. Für jeden Wegpunkt kann eine oder mehr als eine der folgenden Eigenschaften parametrisiert sein oder werden: eine Bewegungsart (Punkt-zu-Punkt, Linear, kreisförmig und polynom), die Trajektorie, eine Geschwindigkeit bzw. deren Änderung (d.h. die Beschleunigung), eine Kraft (z.B. deren Moment, d.h. ein Drehmoment), eine oder mehr als eine Information über das Werkzeug, und/oder ein Überschleifradius. Alternativ oder zusätzlich kann für jeden Wegpunkt eine oder mehr als eine der folgenden Eigenschaften parametrisiert sein oder werden: ein Zustand der Funktion des Wechselaufsatzes und/oder Sensordaten (z.B. des Wechselaufsatzes und/oder des Handgeräts).

Beispielsweise kann die Trajektorie stückweise aus Polynomen zusammengesetzt sein oder werden. Der sich daraus ergebende Polynomzug kann beispielsweise aus Polynomen höchstens n-ten Grades bestehen, so dass ein Polynomzug n-ten Grades (auch als Spline n-ten Grades bezeichnet) bereitgestellt wird. Die Stellen der Trajektorie, an denen zwei Polynome aneinandergrenzen (die sogenannten Knoten), können optional (n-1)-mal stetig differenzierbar sein. Beispielsweise kann mittels des Polynomzugs eine punkt-basierte Trajektorie (deren Punkte die Knoten definieren) in eine bahn-basierte Trajektorie konvertiert werden, indem Polynome gesucht werden, die die Punkte der punkt-basierten Trajektorie miteinander verbinden.

Es können unterschiedliche Werkzeug- und/oder Werkstückkoordinatensysteme konfigurierbar sein. Die Trajektorie kann beispielsweise beschrieben werden mittels der Angabe der nacheinander angefahrenen Wegpunkte (dann auch als punkt-basierte Trajektorie bezeichnet), mittels der Angabe der abgefahrenen Bahnkurve (dann auch als bahn-basierte Trajektorie bezeichnet) oder mittels einer Mischung dieser Angaben.

Die punkt-basierte Trajektorie kann beispielsweise offen lassen, auf welchem Wege die Wegpunkte nacheinander eingenommen werden, d.h. diese kann das Ermitteln der konkreten Bahnkurve, welche die Wegpunkte miteinander verbindet, der Steuervorrichtung bzw. den Möglichkeiten der Maschine überlassen. Die punkt-basierte Trajektorie eignet sich beispielsweise, wenn die Tätigkeit diskrete Arbeitsschritte an diskreten Orten aufweist (beispielsweise Pick-and-Place).

Die bahn-basierte Trajektorie ermöglicht eine eineindeutige Wegpunkt-Zeitpunkt-Zuordnung und beschreibt damit im Detail, welcher Wegpunkt zu welchem Zeitpunkt eingenommen wird. Die bahn-basierte Trajektorie eignet sich beispielsweise, wenn die Tätigkeit entlang eines bestimmten Pfades oder mit einer bestimmten Geschwindigkeit erfolgen soll (beispielsweise das Verteilen von Klebstoff oder das Lackieren).

Gemäß verschiedenen Ausführungsformen erfolgt das Trainieren der Maschine unter Verwendung der Trainingsdaten. Dazu können die Trainingsdaten aufgezeichnet werden. Beispielsweise kann das Aufzeichnen der Trainingsdaten mittels Eingebens der Aktivierungsinformation gestartet werden. Grundsätzlich kann das Aufzeichnen von Daten allerdings auch schon vor dem eigentlichen Trainieren erfolgen, z.B. sobald das Handgerät angeschaltet und/oder im System registriert ist. In dem Fall kann die Aktivierungsinformation angeben, welcher Teil der aufgezeichneten Daten als Trainingsdaten verwendet wird. Mit anderen Worten können von den aufgezeichneten Daten diejenigen, die als Trainingsdaten verwendet werden, herausgefiltert werden mittels der Aktivierungsinformation (z.B. zeitaufgelöst). Dazu kann die Aktivierungsinformation beispielsweise einen Zeitstempel aufweisen, der mit der zeitabhängigen Aufzeichnung der Daten abgeglichen wird. Alternativ kann das Filtern der aufgezeichneten Daten auch nach dem Beenden des Aufzeichnens erfolgen, z.B. manuell anhand einer grafischen Darstellung der aufgezeichneten Daten. In dem Fall können diejenigen Daten von dem Nutzer markiert werden mittels der Aktivierungsinformation, die als Trainingsdaten dem Trainieren der Maschine zugeführt werden sollen (z.B. ein Anfang und ein Ende einer Datensequenz). In analoger Weise können den bereits vorhandenen Trainingsdaten weitere Daten hinzugefügt werden oder aus den bereits vorhandenen Trainingsdaten können Teile entfernt werden. Das Filtern kann beispielsweise mittels einer Handgerät-externen Vorrichtung erfolgen.

Das Herausfiltern der Trainingsdaten (kurz auch als Filtern bezeichnet) kann beispielsweise aufweisen, den gesamten aufgezeichneten Bewegungsablauf mithilfe der Handgerät-externen Vorrichtung abzuspielen und dessen Bewegungen zu untersuchten. Das Abspielen des aufgezeichneten Bewegungsablaufs kann mittels des physischen Roboters und/oder mittels einer virtuellen Repräsentation des Roboters erfolgen. Die aufgezeichneten Daten können beispielsweise auf dem Roboter mittels eines Fernzugriffs (z.B. einem Anwendungsprogramm, wie beispielsweise einer iOS Anwendung) einmal oder mehr als einmal abgespielt werden und die Bewegungen untersucht werden. Einzelne Punkte im Raum, so genannte Keyframes, welche als Trainingsdaten erhalten bleiben sollen, können dabei in den Daten markiert und gegebenenfalls feinjustiert werden, z.B. durch Funktionen in den verschiedenen Koordinatensystemen. Zusätzlich oder alternativ dazu können mithilfe von Machine Learning (maschinelles Lernen) und mathematischen Optimierungen markierbare Punkte und/oder die gesamten oder Teile der gesamten für das Training genutzten Daten vorhergesagt und gefiltert werden. Das Filtern kann beispielsweise aufweisen, Anomalien, Bewegungsqualität und Ausdruckstärke, redundante Informationen und/oder Datenreduktion zu berücksichtigen.

Zusätzlich oder alternativ dazu kann die Verfahrart des Roboters (auch als Bewegungsart bezeichnet) zwischen zwei Punkten definiert werden, zum Beispiel Punkt-zu-Punkt-, Linear- oder Halbkreis-Verfahrart. Das Filtern kann ein oder mehr als einmal mittels durch den Nutzer vorgegebener Informationen wiederholt werden, z.B. bis die zum Training zu verwendenden Daten ermittelt sind.

Die Summe aller markierten Punkte (Keyframes) des aufgezeichneten Bewegungsablaufs und dessen Verfahrart können als Trainingsdaten oder zumindest als Teil dessen verwendet werden. Optional können die markierten Punkte im Raum kartesisch verschoben werden und/oder es kann der Endeffektor des Roboters um einen solchen Punkt rotiert werden.

Beispiele für das Filtern bzw. für Komponenten des Filterns können somit aufweisen: Ermitteln und Entfernen von Anomalien aus den Trainingsdaten, Glätten der Trainingsdaten (z.B. zur Verbesserung von der Bewegungsqualität und ihre Ausdrucksstärke), Ermitteln und Entfernen von redundanten Teilen der Trainingsdaten (die beispielsweise identisch sind oder zumindest kaum Mehrwert bieten), Datenreduktion bei Erhaltung des Inhaltes.

Alternativ oder zusätzlich zu dem Filtern können Teile der Trainingsdaten gruppiert werden, z.B. als Repräsentation einzelner Operationen bzw. Aktivitäten des komplexeren Gesamtprozesses.

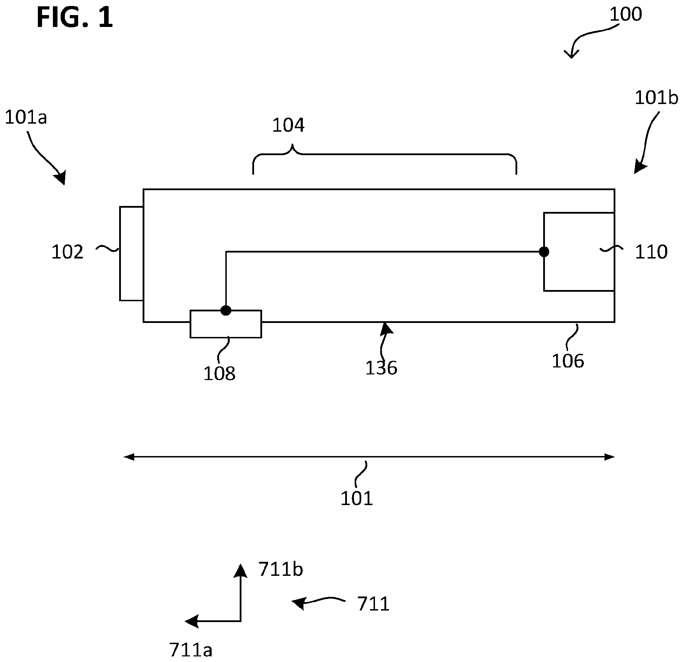

**Fig.1** veranschaulicht ein Handgerät 100 gemäß verschiedenen Ausführungsformen in einer schematischen Seitenansicht oder Querschnittsansicht. Das Handgerät 100 kann eine Längserstreckung 101 (Ausdehnung in Längsrichtung 711a) aufweisen, die beispielsweise in einem Bereich von ungefähr 10 cm (Zentimeter) bis ungefähr 50 cm ist, z.B. in einem Bereich von ungefähr 15 cm bis ungefähr 30 cm. Entlang der Längsrichtung 711a kann das Handgerät 100 von zwei Stirnseiten 101a, 101b begrenzt sein, von denen eine erste Stirnseite 101a die Kupplungsstruktur 102 aufweist. Die Kupplungsstruktur 102 (z.B. ein Kupplungsmechanismus) kann eingerichtet sein zum lösbaren Kuppeln eines Wechselaufsatzes, wie er später noch genauer beschrieben wird.

Der Griff 104 kann sich von der Kupplungsstruktur 102 weg entlang der Längsrichtung 711a erstrecken. Der Griff 104 kann beispielsweise ergonomisch geformt sein, z.B. abgerundet, sich verjüngend und/oder anderweitig an der Form einer Hand angepasst sein. Im Allgemeinen kann der Griff 104 eingerichtet sein, von einer oder mehr als einer Hand eines Benutzers ergriffen und/oder gehalten zu werden. Beispielsweise müssen verschiedene Ausführungsformen nicht notwendigerweise einen separaten Griff (Extragriff) aufweisen, sondern können diesen integriert haben. Dazu kann der Griff 104 beispielsweise eine Längserstreckung 101 aufweisen, die beispielsweise in einem Bereich von ungefähr 5 cm (Zentimeter) bis ungefähr 30 cm ist, z.B. in einem Bereich von ungefähr 10 cm bis ungefähr 20 cm. Alternativ oder zusätzlich kann der Griff 104 einen Umfang (z.B. entlang eines in sich geschlossenen Pfades, der quer zur Längsrichtung 711a verläuft), aufweisen, der in einem Bereich von ungefähr 10 cm bis ungefähr 30 cm ist.

Der Griff 104 kann auch anders relativ zu der Kupplungsstruktur 102 ausgerichtet sein, z.B. sich schräg zu Ankupplungsrichtung erstreckend, so dass das Handgerät 100 abgewinkelt ist. Dies kann für manche Tätigkeiten intuitiver sein. Das hierin für das längserstreckte Handgerät 100 Beschriebene kann selbstverständlich in Analogie für eine andere Konfiguration oder Ausrichtung des Griffs 104 gelten. Ebenso kann das Handgerät 100 mehrere (z.B. voneinander weg oder quer zueinander ersteckte) Griffe aufweisen, die ein sicheres Handhaben des Handgeräts 100 ermöglichten. In Analogie kann der oder jeder Griff mehrere Griffpunkte aufweisen für mehrere Hände. Einer oder mehr als einer der Griffe kann der Griff des Handgeräts sein. Einer oder mehr als einer der Griffe kann lösbar an dem Handgerät befestigt sein oder werden, beispielsweise als Komponente des Wechselaufsatzes oder als separater Griff bereitgestellt. Einer oder mehr als einer der Griffe des Handgeräts kann persistent (dauerhaft) oder nicht persistent sein.

Optional kann das Handgerät 100 eine oder mehr als eine Benutzerschnittstelle (z.B. Benutzer-Eingabeschnittstelle und/oder Benutzer-Ausgabeschnittstelle) aufweisen. Beispiele für die eine oder mehr als eine Benutzerschnittstelle des Handgeräts 100 können einen Bildschirm (auch als Anzeigevorrichtung bezeichnet), eine physische Tastatur, einen Lautsprecher, eine Vibrationsvorrichtung, einen oder mehr als einen physischen Schalter (z.B. Taster), eine oder mehr als einen Lichtquelle oder Ähnliches aufweisen. Alternativ oder zusätzlich kann das Handgerät 100 einen oder mehr als einen Sensor aufweisen, wie später noch genauer beschrieben wird. Die Vibrationsvorrichtung kann im Allgemeinen einen Schwingungserreger aufweisen, z.B. eine Membran oder ein Piezoelement. Der Schwingungserreger kann eingerichtet sein, ein diesem eingekoppeltes elektrisches Signal in eine mechanische Schwingung, die haptisch erfassbar ist (auch als Vibration bezeichnet), umzuwandeln (z.B. die Frequenz des Signals aufweisend).

Die Eingabeeinheit 108 kann beispielsweise mittels einer Benutzerschnittstelle (dann auch als Benutzer-Eingabeschnittstelle bezeichnet) bereitgestellt sein, welche zum Betätigen durch einen Benutzer eingerichtet ist, so dass die Aktivierungsinformation eingegeben werden kann mittels des Betätigens der Benutzerschnittstelle. Die Aktivierungsinformation kann im Allgemeinen mittels eines Sensors erfasst werden, z.B. mittels eines berührungsempfindlichen Sensors (was eine berührungsempfindliche Eingabeeinheit 108 bereitstellt). Alternativ oder zusätzlich kann die Eingabeeinheit auch einen anderen Sensor aufweisen, welcher ein Betätigen der Eingabeeinheit erfassen kann. Der Sensor der Eingabeeinheit 108 kann beispielsweise ein Annäherungssensor, ein Berührungssensor, ein physischer Schalter (z.B. Taster) oder Ähnliches sein.

Die Eingabeeinheit 108 kann beispielsweise Teil des Griffes 104 sein oder an diesen angrenzen. Dies erleichtert die Bedienung.

Die Aktivierungsinformation kann im Allgemeinen das Aktivieren des Trainierens der Maschine auslösen. In einem wenig komplexen Beispiel, kann das Trainieren aktiviert werden, wenn mittels der Eingabeeinheit 108 eine Benutzereingabe (z.B. eine Kraft und/oder eine Berührung aufweisend) erfasst wird. Beispielsweise kann der Schalter mittels der Kraft betätigt werden, so dass das Trainieren aktiviert wird. In ähnlicher Weise kann das Trainieren deaktiviert werden, zum Beispiel wenn erfasst wird, dass eine andere Benutzereingabe erfolgt oder die Benutzereingabe unterbrochen wird. Es können allerdings auch komplexere Benutzereingaben implementiert werden. Beispielsweise kann eine erste Eingabesequenz (beispielsweise ein langer oder wiederholter Tastendruck) das Trainieren aktivieren und/oder kann eine zweite Eingabesequenz das Trainieren deaktivieren.

Die Eingabeeinheit 108 ermöglicht beispielsweise die Aufzeichnung von Informationen über die Tätigkeit zu starten und/oder zu beenden. Die mittels der Eingabeeinheit 108 bereitgestellten Funktionen können aber auch ganz oder teilweise mittels einer anderen Handgerät-externen Vorrichtung bereitgestellt werden, z.B. mittels eines Funkschalters und/oder mittels einer mobilen Rechenvorrichtung (z.B. eines Tablets), auf welcher beispielsweise eine Anwendung ausgeführt wird, welche die Funktionen der Eingabeeinheit 108 emuliert.

Allgemeiner gesprochen kann eine mittels der Eingabeeinheit 108 eingegebene erste Aktivierungsinformation repräsentieren, dass das Trainieren aktiviert und/oder fortgesetzt werden soll. Alternativ oder zusätzlich kann eine mittels der Eingabeeinheit eingegebene zweite Aktivierungsinformation repräsentieren, dass das Trainieren deaktiviert und/oder unterbrochen werden soll.

Die Eingabeeinheit 108 kann optional gemäß einem Nahfeld-Kommunikationsprotokoll eingerichtet sein, gemäß welchem die Aktivierungsinformation eingegeben wird. Beispielsweise kann NFC verwendet werden, um die Aktivierungsinformation einzugeben.

Die Aktivierungsinformation kann mittels der Ausgabeeinheit 110 ausgegeben (z.B. kommuniziert) werden. Die Ausgabeeinheit 110 kann beispielsweise eingerichtet sein, die Aktivierungsinformation gemäß einem Kommunikationsprotokoll auszugeben, z.B. gemäß einem Netzwerk-Kommunikationsprotokoll. Die Aktivierungsinformation kann beispielsweise drahtgebunden (auch als kabelgebunden bezeichnet) oder drahtlos übertragen werden. Grundsätzlich können beliebige Kommunikationsprotokolle verwendet werden, standardisierte oder auch proprietäre Kommunikationsprotokolle. Im Folgenden wird zum einfacheren Verständnis auf eine drahtlose Kommunikation der Ausgabeeinheit 110 (z.B. mittels Funk) Bezug genommen. Das Beschriebene kann allerdings in Analogie auch für eine drahtgebundene Kommunikation der Ausgabeeinheit 110 gelten.

Die Ausgabeeinheit 110 kann beispielsweise eine Datenübertragungsschnittstelle aufweisen, z.B. einen Signalgenerator und eine Antenne. Der Signalgenerator kann beispielsweise eingerichtet sein, die Aktivierungsinformation zu codieren, z.B. gemäß dem Kommunikationsprotokoll, und ein Signal gemäß der codierten Aktivierungsinformation der Antenne zuführen.

Der Griff 104, die Eingabeeinheit 108 und/oder die Kupplungsstruktur 102 können beispielsweise Teil eines Gehäuses 136 des Handgeräts 100 sein oder von dem Gehäuse 136 gehalten werden. Das Gehäuse 136 kann einen Hohlkörper aufweisen, in welchem eine oder mehr als eine elektrische Komponente des Handgeräts 100 angeordnet ist, z.B. die Ausgabeeinheit 110, zumindest ein Sensor, eine Batterie, usw.

Um das Handgerät 100 einfacher handhaben (z.B. bewegen) zu können, kann das Handgerät 100 leicht sein, z.B. ein Gewicht aufweisen von weniger als ungefähr 5 kg (Kilogramm), z.B. als ungefähr 2,5 kg, z.B. als ungefähr 1 kg, z.B. als ungefähr 0,5 kg. Alternativ oder zusätzlich kann das Handgerät 100 aus einem leichten Material gefertigt sein. Beispielsweise kann ein Gehäuse 136 des Handgeräts 100 einen Kunststoff und/oder Leichtmetall aufweisen oder daraus gebildet sein.

Im Allgemeinen muss die Kupplungsstruktur 102 nicht notwendigerweise stirnseitig angeordnet sein. Beispielsweise kann die Kupplungsstruktur 102 auch an jeder Position des Endabschnitts des Handgeräts 100 angeordnet sein, der von dem Griff 104 weg erstreckt ist, z.B. auch seitlich. Eine stirnseitige Kupplungsstruktur 102 kann intuitiver und einfacher zu benutzen sein. Eine seitliche Kupplungsstruktur 102 kann eine komplexere Kupplungsmechanik ermöglichen.

Beispielsweise können mehrere Magneten entlang eines ringförmigen Pfades an der Außenseite des Endabschnitts angeordnet sein.

Im Folgenden wird zum leichteren Verständnis auf eine stirnseitige Kupplungsstruktur 102 Bezug genommen. Das Beschriebene kann in Analogie für eine anders angeordnete Kupplungsstruktur 102 gelten, z.B. für eine seitlich angeordnete Kupplungsstruktur 102.

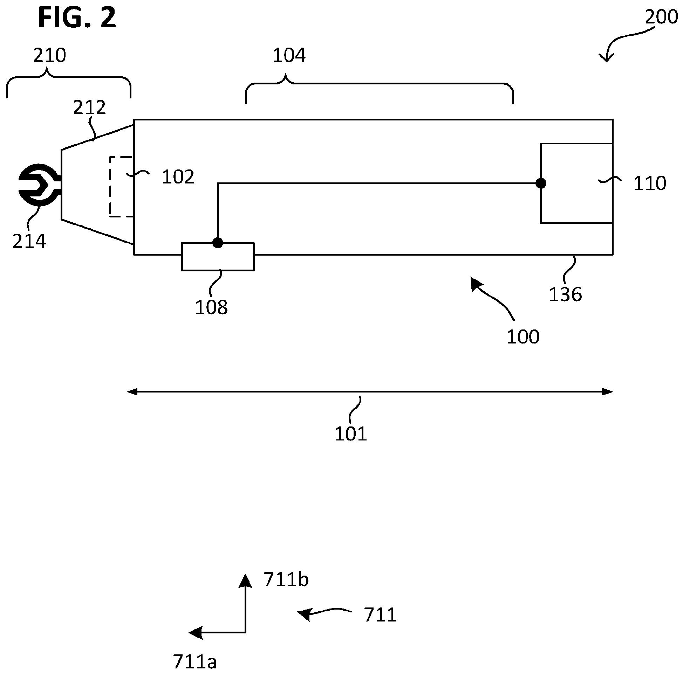

**Fig.2** veranschaulicht ein System 200 gemäß verschiedenen Ausführungsformen in einer schematischen Seitenansicht oder Querschnittsansicht, wobei das System 200 das Handgerät 100 und einen Wechselaufsatz 210 aufweist, der mit der Kupplungsstruktur 102 lösbar gekuppelt ist.

Das lösbare Kuppeln kann verstanden werden, als dass der Wechselaufsatz mittels der Kupplungsstruktur 102 zerstörungsfrei an dem Handgerät 200 befestigt werden kann und/oder von diesem gelöst werden kann, beispielsweise wiederholt und/oder ohne Werkzeug zu benötigen. Beispielsweise können zwei Wechselaufsätze gegeneinander ausgetauscht werden.

Dazu können die Kupplungsstruktur 102 und der oder jeder Wechselaufsatz 210 zueinander korrespondierend eingerichtet sein, so dass diese, wenn in physischem Kontakt miteinander gebracht sind, miteinander verbunden werden können, z.B. mittels einer Relativbewegung dieser zueinander. In analoger Weise können diese wieder voneinander getrennt werden, so dass der Wechselaufsatz 210 in einen Abstand von der Kupplungsstruktur 102 gebracht oder ausgewechselt werden kann.

Beispielsweise kann der oder jeder Wechselaufsatz 210 eine zu der Kupplungsstruktur 102 korrespondierende Gegen-Kupplungsstruktur 212 aufweisen, die miteinander verbunden werden können. Beispielsweise kann das Verbinden mittels eines Formschlusses und/oder eines Kraftschlusses erfolgen. Weist die Kupplungsstruktur 102 ein Bajonett oder Gewinde auf, kann dies einen Formschluss bereitstellen. Weist die Kupplungsstruktur 102 einen Einsteckabschnitt auf, kann dies einen Kraftschluss mittels Ineinandersteckens bereitstellen. Ein solcher ist kostengünstig umzusetzen und einfach zu handhaben.

Beispielsweise kann das Verbinden mittels eines magnetischen Feldes erfolgen, z.B. indem die Kupplungsstruktur 102 und/oder der Wechselaufsatz 210 einen Magneten aufweist, der das magnetische Feld bereitstellt. Der Magnet kann ein Dauermagnet oder Elektromagnet sein. Das magnetische Feld kann eine Anziehungskraft zwischen der Kupplungsstruktur 102 und dem Wechselaufsatz 210 bereitstellen, z.B. mittels eines ferromagnetischen Materials des Wechselaufsatzes 210.

Der Wechselaufsatz 210 kann gemäß der anzutrainierenden Tätigkeit eingerichtet sein. Beispielsweise kann der Wechselaufsatz 210 ein Werkzeug 214 zum Durchführen der Tätigkeit aufweisen. Das Werkzeug 214 kann allgemein eine der Tätigkeit gemäße Funktion repräsentieren, mittels welcher auf ein Werkstück eingewirkt wird. Das Werkzeug 214 kann beispielsweise ein Urformen-Werkzeug, Inspizieren-Werkzeug, ein Fügen-Werkzeug (z.B. Schrauber, Klebepistole oder Schweißgerät), ein Verlagerung-Werkzeug (z.B. Greifer), ein Trennen-Werkzeug oder Ähnliches repräsentieren. Das Fügen-Werkzeug kann beispielsweise ein Beschichten-Werkzeug (z.B. eine Lackierpistole, einen Pulverbeschichtung-Pistole) aufweisen oder daraus gebildet sein. Das Werkzeug 214 des Wechselaufsatzes 210 muss allerdings nicht oder nicht vollständig funktionstüchtig sein, sondern es kann ausreichen, wenn das Werkzeug 214 des Wechselaufsatzes 210 die Form und/oder Kontur des realen Prozesswerkzeugs und/oder zumindest ein Abbild dessen aufweist (beispielsweise analog zu einem Blindelement).

Das System 200 kann beispielsweise mehrere (z.B. mindestens 2, 3, 4, 5, 10 oder mindestens 20) solcher Wechselaufsätze 210 aufweisen, welche sich in ihrem Werkzeug 214 voneinander unterscheiden. Von den mehreren Wechselaufsätzen 210 kann ein Wechselaufsatz mit dem Handgerät 100 gekuppelt sein oder werden. Soll das Werkzeug verändert werden, kann ein an das Handgerät gekuppelter erster Wechselaufsatz 210, der ein erstes Werkzeug 214 aufweist, gegen einen zweiten Wechselaufsatz, der ein davon verschiedenes zweites Werkzeug 214 aufweist, ausgetauscht werden.

Das System 200 kann noch weitere Komponenten aufweisen, wie später genauer beschrieben wird.

Das Paar aus Handgerät 100 und daran angekuppelten Wechselaufsatz 210 wird im Folgenden auch als Trainiergerät 302 und das Werkzeug des Wechselaufsatzes 210 als Trainierwerkzeug 214 bezeichnet. Im Allgemeinen kann ein Wechselaufsatz 210 auch mehrere Trainierwerkzeuge 214 aufweisen, die sich beispielsweise in der Tätigkeit unterscheiden, gemäß welcher diese eingerichtet sind. Die mehreren Trainierwerkzeuge 214 des Wechselaufsatzes 210 können beispielsweise drehbar an der Gegen-Kupplungsstruktur 212 gelagert sein.

Eine elektrische Leistung des oder jedes Trainierwerkzeugs 214 kann beispielsweise kleiner sein als des Handgeräts 100. Dies erleichtert es, das Trainierwerkzeug 214 mittels des Handgeräts 100 elektrisch zu versorgen und/oder ermöglicht ein passives Trainierwerkzeug 214.

In verschiedenen Ausführungsformen kann das Trainierwerkzeug 214 beispielsweise als nicht voll-funktionsfähiges Werkzeug bereitgestellt sein oder werden.

Ein Gewicht des oder jedes Trainierwerkzeugs 214 kann beispielsweise kleiner sein als des Handgeräts 100. Dies erleichtert es, das Trainierwerkzeug 214 mittels des Handgeräts 100 zu tragen und vereinfacht dessen Befestigung.

Ein Material des oder jedes Trainierwerkzeugs 214 kann beispielsweise Kunststoff und/oder Leichtmetall (z.B. Aluminium) sein. Dies reduziert dessen Gewicht.

Eine Größe (z.B. Volumen und/oder Ausdehnung entlang der Längsrichtung) des oder jedes Trainierwerkzeugs 214 kann beispielsweise kleiner sein als des Handgeräts 100. Dies erleichtert es, das Trainierwerkzeug 214 mittels des Handgeräts 100 zu tragen und vereinfacht dessen Befestigung. Wenn eine geringere oder keine Erleichterung in Kauf genommen werden kann, kann das Trainierwerkzeug 214 auch gleich groß sein oder größer sein als das Handgerät 100.

Die Kupplungsstruktur 102 kann ein Auswechseln des Wechselaufsatzes 210 erleichtern, wie im Folgenden genauer beschrieben wird. Alternativ zu der Kupplungsstruktur 102 kann das Trainierwerkzeug 214 auch fest (d.h. unlösbar) an dem Handgerät 100 angebracht sein (so dass dieses nicht zerstörungsfrei, ohne Werkzeug, d.h. montagefrei, gewechselt werden kann). Das Trainierwerkzeug 214 kann beispielsweise mittels Schrauben anderweitig befestigt an der Stirnseite befestigt sein, z.B. damit verschweißt oder verklebt. Das Trainierwerkzeug 214 kann beispielsweise in die Stirnseite eingebettet sein. Ein solches Handgerät 100 mit fest installiertem Trainierwerkzeug 214 kann dann zum Trainieren genau der einen Tätigkeit eingerichtet sein, gemäß welcher das Trainierwerkzeug 214 eingerichtet ist. Das im Folgenden für das Handgerät 200 mit Kupplungsstruktur 102 Beschriebene kann sinngemäß auch für das Handgerät mit fest installiertem Trainierwerkzeug 214 gelten. In verschiedenen Ausführungsformen kann die Tätigkeit Allgemein über die von ihr zu erfüllende Prozessaufgabe definiert sein und nicht (z.B. nur) über den spezifischen Vorgang zur Erfüllung der Prozessaufgabe. Dies ermöglicht beispielsweise Variationen beim Erfüllen derselben Prozessaufgabe zu berücksichtigen und somit mehr Freiraum bei der Gestaltung des Trainierens der Maschine. Beispielsweise kann die Tätigkeit auch Variationen bzw. Abwandlungen von Vorgängen sowie ähnliche oder gleichartige Vorgänge umfassen, welche dieselbe Prozessaufgabe erfüllen.

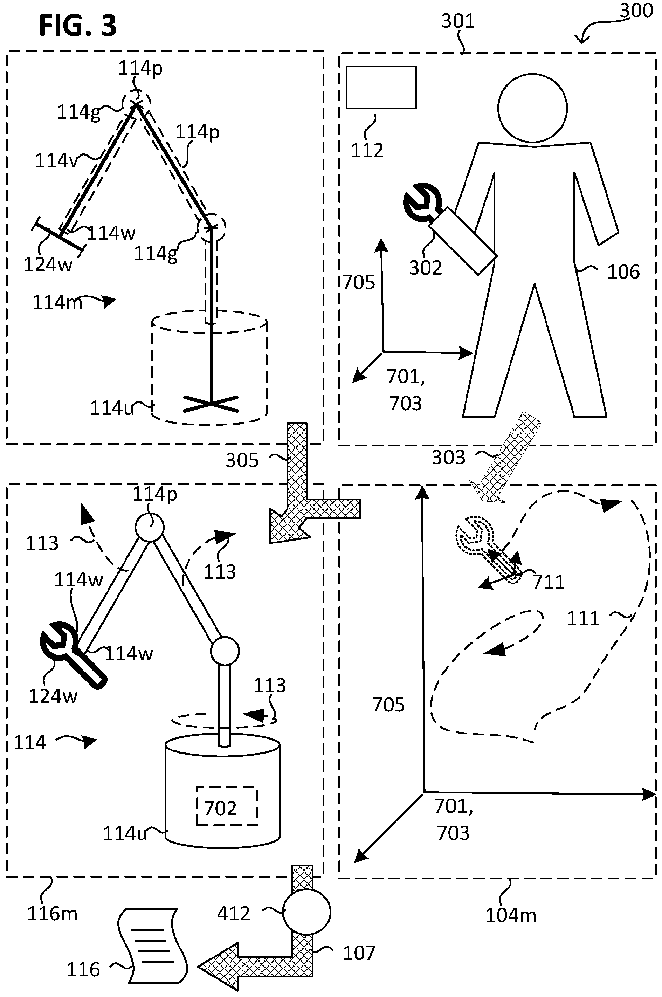

**Fig.3** veranschaulicht ein Verfahren 300 gemäß verschiedenen Ausführungsformen in verschiedenen schematischen Ansichten.

Weiterhin ist in Fig.3 eine zu trainierende Maschine 114 dargestellt. Die zu programmierende Maschine 114 kann ein Roboter sein, z.B. ein Industrieroboter, zur Handhabung, Montage oder Bearbeitung eines Werkstücks, ein kollaborativer Roboter (auch als Cobot bezeichnet) bzw. ein Serviceroboter (z.B. eine Kochmaschine oder eine Pflegemaschine). Das Verfahren 300 ermöglicht beispielsweise das Endnutzerprogrammieren der vollständigen Automatisierungsapplikation (inklusive Prozessparameter und Integration) durch einen technischen Laien. Die zu trainierende Maschine 114 kann eine physische Maschine sein. Das für diese hierin Beschriebene kann in Analogie auch für eine virtuelle zu trainierende Maschine 114 gelten.

Beispielsweise kann bei der Verwendung mehrerer physischer Maschinen 114 gleichen Typs (beispielsweise mittels Ausmittelns der Fertigungsungenauigkeiten jeder der Maschinen) ein idealisiertes virtuelles Modell des Typs (das maschinentypspezifische Modell) verwendet werden, welches antrainiert wird. Auf Grundlage der antrainierten virtuellen Maschine 114 können die Steuerinformationen ermittelt werden (anschaulich ein Mapping der physischen Maschine), z.B. automatisiert.

Die zu trainierende Maschine 114 kann im Allgemeinen einen Manipulator und ein Gestell 114u aufweisen, an welchem der Manipulator abgestützt ist. Der Begriff Manipulator fasst die Gesamtheit der beweglichen Glieder 114v, 114g, 114w der Maschine 114 zusammen, deren Ansteuerung eine physikalische Interaktion mit der Umgebung ermöglicht, um z.B. eine Prozesstätigkeit durchzuführen. Zur Ansteuerung kann die Maschine 114 eine Steuervorrichtung 702 (auch als Maschinensteuerung 702 bezeichnet) aufweisen, welche eingerichtet ist, die Interaktion mit der Umgebung gemäß einem Steuerprogram zu implementieren. Das letzte Glied 114w des Manipulators (auch als Endeffektor 114w bezeichnet) kann ein oder mehr als ein Werkzeug 124w (auch als Prozesswerkzeug 124w bezeichnet) aufweisen, welches gemäß der zu trainierenden Tätigkeit eingerichtet ist, z.B. die Tätigkeit auszuführen. Das Prozesswerkzeug 124w kann beispielsweise ein einen Schweißbrenner, ein Greifinstrument, eine Klebepistole, eine Lackiereinrichtung oder dergleichen aufweisen.

Der Manipulator kann zumindest eine Positionierungsvorrichtung 114p, beispielsweise einen Roboterarm 114p (allgemeiner auch als Gelenkarm bezeichnet), aufweisen, an welchem der Endeffektor 114w befestigt ist. Der Roboterarm 114p stellt anschaulich einen mechanischen Arm bereit, welcher ähnliche Funktionen wie ein menschlicher Arm oder sogar darüber hinaus (z.B. mehrachsige Bewegungen pro Gelenk oder kombinierte Drehung und Schwenkung pro Gelenk) bereitstellen kann. Der Roboterarm 114p kann beispielsweise mehrere (z.B. mindestens 2, 3, 4, 5, 10 oder mindestens 20) Gelenke aufweisen, von denen jedes Gelenk mindestens einen (z.B. 2, 3, 4, 5 oder 6) Freiheitsgrad bereitstellen kann.

Der Manipulator kann selbstverständlich auch anders eingerichtet sein, z.B. bei einer Portalmaschine, dem allgemeinen Typ der Mehrgelenk-Roboter oder einem Deltaroboter. Die Maschine kann beispielsweise eine offene oder eine geschlossene kinematische Kette aufweisen. Im Folgenden wird auf den einfacher verständlicheren Roboterarm 114p Bezug genommen. Das für den Roboterarm 114p Beschriebene kann in Analogie auch für eine anders eingerichtete Maschine bzw. einen anders eingerichteten Manipulator gelten.

Die Glieder der Positionierungsvorrichtung 114p können beispielsweise Verbindungsglieder 114v und Gelenkglieder 114g sein, wobei die Verbindungsglieder 114v mittels der Gelenkglieder 114g untereinander verbunden sind. Ein Gelenkglied 114g kann beispielsweise ein oder mehrere Gelenke aufweisen, von denen jedes Gelenk den damit verbundenen Verbindungsgliedern 114v relativ zueinander eine rotatorische Bewegung (d.h. Drehbewegung) und/oder eine translatorische Bewegung (d.h. Verschiebung) bereitstellen kann. Die Bewegung der Gelenkglieder 114g kann mittels Aktoren in Gang gesetzt werden, welche von der Steuervorrichtung 702 angesteuert werden. Ein oder mehr als ein Gelenk kann auch ein Kugelgelenk aufweisen oder daraus gebildet sein.

In 301 kann ein Trainiergerät 302 (das Handgerät 100 und daran angekuppelten Wechselaufsatz 210 aufweisend) bereitgestellt sein oder werden. Zum Trainieren (beispielsweise sobald bzw. solange das Trainieren aktiviert ist) kann eine Person 106 (auch als Benutzer bezeichnet) eine Tätigkeit zur Erledigung der Prozessaufgabe mittels des Trainiergeräts 302 vorführen (z.B. Lackieren, Fertigen und/oder Montieren eines Bauteils). Das Trainierwerkzeug 214 kann beispielsweise ein beliebiges Prozesswerkzeug 124w repräsentieren, dass eine Maschine 114 führen kann. Dazu kann das Prozesswerkzeug 124w mit dem Werkstück in Wechselwirkung treten.

Zum Trainieren kann das Trainiergerät 302 Daten an eine Handgerät-externe Vorrichtung übermitteln, z.B. zumindest die Trainingsdaten. Die Trainingsdaten können die Aktivierungsinformation und optional eine räumliche Information aufweisen oder daraus gebildet sein. Optional können die Trainingsdaten eine oder mehr als eine der folgenden Informationen aufweisen: Ein oder mehrere Kalibrierungswerte, Qualitätsinformationen, Sensordaten, (z.B. aggregierte, fusionierte und/oder optimierte) Informationen, Aktivierungsinformationen. Eine Qualitätsinformation kann beispielsweise eine Zuverlässigkeit eines Datenpunkt des Trainierens angeben, beispielsweise anschaulich, wie gut der Datenpunkt ist. Die Qualitätsinformation kann jedem Datenpunkt des Trainierens zugeordnet sein oder werden, z.B. mittels der handgerät-externen Vorrichtung. Die Aktivierungsinformationen können beispielsweise auf den Endeffektor der Maschine bezogen sein, z.B. deren Greifersystem und/oder Schweißgerät.

Die räumliche Information kann beispielsweise eine Lage und/oder deren Veränderung (d.h. eine Bewegung) des Trainiergeräts 302 im Raum repräsentieren. Die Aktivierungsinformation kann eine Eingabe an der Eingabeeinheit 108 repräsentieren. Die Bewegung kann beispielsweise eine Translation und/oder Rotation des Trainiergeräts 302 aufweisen und beispielsweise durch Messung der Beschleunigung und/oder der Geschwindigkeit ermittelt werden.

Die Handgerät-externe Vorrichtung erhält beispielsweise die zeitabhängige Lage 111 (d.h. Ort und/oder Orientierung) des Trainiergeräts 302 bzw. dessen Koordinatensystem 711 im Raum 701, 703, 705 (z.B. innerhalb eines Gebäudes 511). Darauf basierend kann die zeitabhängige Lage 111 des Trainierwerkzeugs 214 ermittelt werden. Eine Vielzahl von Positionen, die ein Objekt (z.B. das Handgerät 100, dessen Koordinatensystem 711 und/oder das Trainingswerkzeug 210) einnehmen kann, kann mittels einer Trajektorie 111 (auch als Trainiertrajektorie bezeichnet) repräsentiert werden. Jedem Punkt der Trajektorie 111 können optional eine Zeit und/oder eine Ausrichtung des Objekts zugeordnet sein. Jeder Punkt der Trajektorie 111 und/oder der Ausrichtung kann mittels entsprechender Koordinaten angegeben werden. In analoger Weise kann die Trajektorie 111 alternativ oder zusätzlich auf das Koordinatensystem des Handgeräts 100 und/oder auf einen Arbeitsort bezogen sein. Der Raum 701, 703, 705 (auch als Arbeitsraum bezeichnet), in welchem die Trajektorie 111 angegeben wird, kann von einem Koordinatensystem aufgespannt werden, welches ortsfest ist, d.h. eine invariante Lage zur Erdoberfläche aufweist.

Jedem Punkt (z.B. Vektor) der Trajektorie 111 kann optional ein oder mehr als ein tätigkeitsspezifischer und/oder werkzeugspezifischer Prozessparameter zugeordnet sein, z.B. eine Durchflussmenge, eine Durchflussrate, eine Intensität, eine elektrisch Leistung, ein Tastendruck, usw.

Dazu kann beispielsweise eine Ortungsvorrichtung 112 ortsfest eingerichtet sein und das Koordinatensystem 711 definieren (z.B. aufspannen). Die Ortungsvorrichtung 112 kann beispielsweise einen oder mehr als einen Sensor und/oder einen oder mehr als einen Emitter aufweisen, wie später noch genauer beschrieben wird. Der Teil der Trainingsdaten, der von der Ortungsvorrichtung 112 bereitgestellt wird, kann mittels eines Zeitstempels synchronisiert in Beziehung zu dem Teil der Trainingsdaten, der von dem Trainiergerät 302 bereitgestellt wird, gesetzt werden.

Die Trainingsdaten können optional tätigkeitsspezifische Prozessparameter aufweisen, wie später noch genauer beschrieben wird. Tätigkeitsspezifische Prozessparameter können die Parameter der jeweiligen Funktion und/oder des Arbeitspunktes des Prozesswerkzeugs repräsentieren, z.B. einen Volumenstrom der Lackierpistole.

Auf Grundlage der Trainingsdaten und der optionalen tätigkeitsspezifischen Prozessparameter kann in 303 ein Modell 104m der Prozesstätigkeit (auch als Prozessmodell 104m bezeichnet) ermittelt werden. Dieses Prozessmodell 104m beschreibt anschaulich die durchzuführende Bewegung des Prozesswerkzeugs 124w zum Erledigen der Prozessaufgabe. Das Prozessmodell 104m kann optional von einer Person 106 untersucht und angepasst werden.

In einem Beispiel weisen die eingehenden Trainingsdaten zeitbasierte Bewegungsdaten des von der Person 106 geführten Trainiergeräts 302 und Aktivierungsdaten der Eingabevorrichtung 108 auf. Anschließend wird die Zeitfolge der Trainingsdaten, beispielsweise über Stützpunkte und/oder über aufgabenspezifische analytische Algorithmen, in Teilprozesse zerlegt (z.B. Anfahrt zum Startpunkt der Trajektorie, Einnehmen der Startposition, Beginn des Lackiervorgangs, Lackieren, Abschließen des Prozesses, Abfahren vom Endpunkt der Trajektorie). Optional kann eine manuelle Nachbearbeitung der Trainingsdaten durch den Nutzer erfolgen. Anschließend wird eine Instanz eines Prozessmodells 104m, z.B. in Form eines Metamodells, erzeugt. Das Metamodell beschreibt dabei die Datentypen der Modellinstanz sowie deren mögliche Relationen. Ein Modell ist in diesem Fall beispielhaft ein gerichteter Graph mit typisierten Knoten. Knoten haben einen Datentyp (Knoten des Metamodells), der die Parameter des Modells und deren Wertebereiche beschreibt. Die Erzeugung der Modellinstanz auf Basis der Trainingsdaten erfolgt mit Hilfe von beispielsweise künstlichen neuronalen Netzen. Die künstlichen neuronalen Netze (kNN) können mit herkömmlichen Trainingsverfahren, beispielsweise dem sogenannten Backpropagation-Verfahren, trainiert werden. Alternativ oder zusätzlich können die Trainingsdaten mittels mathematischer Optimierung und/oder maschineller Lernverfahren optimiert werden. Im Training werden die Trainingsvektoren gemäß den jeweils gewünschten Eingangsparametern gewählt, wie beispielsweise Raumkoordinaten des Trainiergeräts 302 (bzw. deren zeitliche Veränderung), zugehörige Zeitangabe, Eingaben am Trainiergerät 302, die beispielsweise Arbeitspunkte und/oder Steuerpunkte des Prozesswerkzeugs repräsentieren können, räumliche Ausrichtung des Trainiergeräts 302, usw. Es ist darauf hinzuweisen, dass sowohl die im Eingangsvektor den kNN enthaltenen Parameter als auch die im Ausgangsvektor des kNN enthaltenen Parameter stark anwendungsabhängig bzw. prozessabhängig sind und entsprechend ausgewählt werden.

Ferner kann eine konkrete Hardwareplattform 114 (allgemeiner auch als Maschine 114 bezeichnet) ausgewählt (z.B. ein konkreter Robotertyp oder Endeffektor, etc.) werden. Die Maschinenspezifik (z.B. Aufbau) der Maschine 114 kann mittels eines Modells 114m der Maschine 114 berücksichtigt werden. Das Modell 114m der Maschine 114 kann maschinenspezifische Informationen eines oder mehrerer verschiedener Maschinen 114 aufweisen. Die maschinenspezifischen Informationen können maschinenspezifische Kenngrößen aufweisen, wie beispielsweise Positionier- und Wiederholgenauigkeiten, maximaler Bewegungsraum, Geschwindigkeiten, Beschleunigung, usw.. Alternativ oder zusätzlich können die maschinenspezifischen Informationen zumindest das Prozesswerkzeug 124w (auch als Maschinenwerkzeug 124w bezeichnet) repräsentieren, die beispielsweise an der Positionierungsvorrichtung 114p der Maschine 114 befestigt sind.

Basierend auf dem Modell 114m der Maschine 114 und dem Prozessmodell 104m kann in 305 ein plattformspezifisches Modell 116m (auch als Steuerungsmodell 116m bezeichnet) für die Maschinensteuerung 702 generiert werden. Das Steuerungsmodell 116m kann die jeweiligen Steuerinformationen aufweisen, welche die Bewegung und/oder Tätigkeit der Maschine 114 steuern. Beispielsweise können dabei die maschinenspezifischen Steuerinformationen (z.B. Volumenstrom am Lackierendeffektor und/oder Bewegungsabläufe) ermittelt werden, welche zu den tätigkeitsspezifischen Prozessparametern korrespondieren.

Das Prozessmodell 104m muss aber nicht notwendigerweise separat ermittelt werden. Auf Grundlage der Trainingsdaten und der optionalen tätigkeitsspezifischen Prozessparameter kann in 305 auch direkt das Steuerungsmodell 116m ermittelt werden, indem beispielsweise die Trajektorie 111 des Trainierwerkzeugs 214 auf eine Trajektorie 113 des Prozesswerkzeugs 124w abgebildet wird.

In 307 kann optional auf Grundlage des Steuerungsmodells 116m mittels eines Codegenerators 412 ein Programmcode 116 (z.B. Quellcode) generiert werden. Der Programmcode 116 kann den jeweiligen Code bezeichnen, in welchem das Steuerungsprogram 116 geschrieben ist. Je nach Prozessaufgabe, Informationstechnik-Infrastruktur und den konkreten Anforderungen können verschiedene Zielplattformen, auf denen der Programmcode 116 aufgeführt werden soll, bedient werden. Dabei kann der Programmcode 116 für ein kommunizierendes Gesamtsystem generiert (z.B. die Robotersteuerung und die SPS-Steuerung) werden. Der Programmcode 116 kann optional vordefinierte Teile aufweisen, an denen der Programmcode 116 von einem Entwickler angepasst werden kann.

Das Bilden des Programmcodes 116 muss nicht notwendigerweise erfolgen, wie später noch genauer beschrieben wird. Die Steuerinformationen des Steuerungsmodells 116m können beispielsweise direkt umgesetzt werden von der Steuervorrichtung 702 der Maschine 114.

In Analoger Weise muss nicht notwendigerweise das Bilden des Steuerungsmodells 116m und/oder des Prozessmodells 104m erfolgen. Beispielsweise können der Steuervorrichtung 702 der Maschine 114 auch aufgearbeitete Trainingsdaten als Steuerinformationen zugeführt werden, welche dann von der Steuervorrichtung 702 der Maschine 114 interpretiert und in Steuersignale zum Ansteuern der kinematischen Kette der Maschine umgesetzt werden.

Die Codegenerierung 107 kann anschaulich aufweisen, eine Transformation vom abhängigen Modell in die Steuerungssprache einer konkreten herstellerspezifischen Maschinensteuerung zu finden. In einem Beispiel erfolgt die Codegenerierung 107 in Form von Templates, die für eine Zielsprache existieren. Diese Templates haben Instanzen des plattformabhängigen Modells 116m als Eingabe und beschreiben auf Metamodellebene, wie daraus Textfragmente generiert werden. Darüber hinaus besitzen diese Templates neben einer reinen Textausgabe auch Kontrollstrukturen (z.B. Verzweigungen). Eine Template-Engine hat wiederum ein Template und eine Instanz des plattformunabhängigen Modells als Eingabe und erzeugt daraus eine oder mehrere Textdateien, die dem Programmcode 116 hinzugefügt werden können. Es versteht sich, dass auch jede andere Form der Codegenerierung 107 verwendet werden kann, z.B. ohne Templates zu verwenden und/oder nur auf Grundlage mathematischer Abbildungen.

Mittels der Codegenerierung 107 kann ein Steuerungsprogramm 116 gebildet werden, welches von der entsprechenden Maschine 114 ausführbar ist.

Die Codegenerierung 107 kann beispielsweise für eine Maschinensteuerung 702 und/oder eine SPS-Steuerung 702 erfolgen. Die Codegenerierung 107 kann beispielsweise menschenlesbare Codesegmente (d.h. Quellcode) und/oder maschinenlesbare Codesegmente (d.h. Maschinencode) erzeugen. Der Quellcode kann für verschiedene Zielsprachen generiert werden, z.B. je nachdem, welche Zielsprache sich für die entsprechende Maschine eignet. Optional kann der Quellcode, z.B. durch einen Entwickler, nachträglich angepasst und bearbeitet werden.

Das Erzeugen 305 des Steuermodells 116m kann somit auf Grundlage der Trainingsdaten und einem Model 114m der Maschine 114 erfolgen.

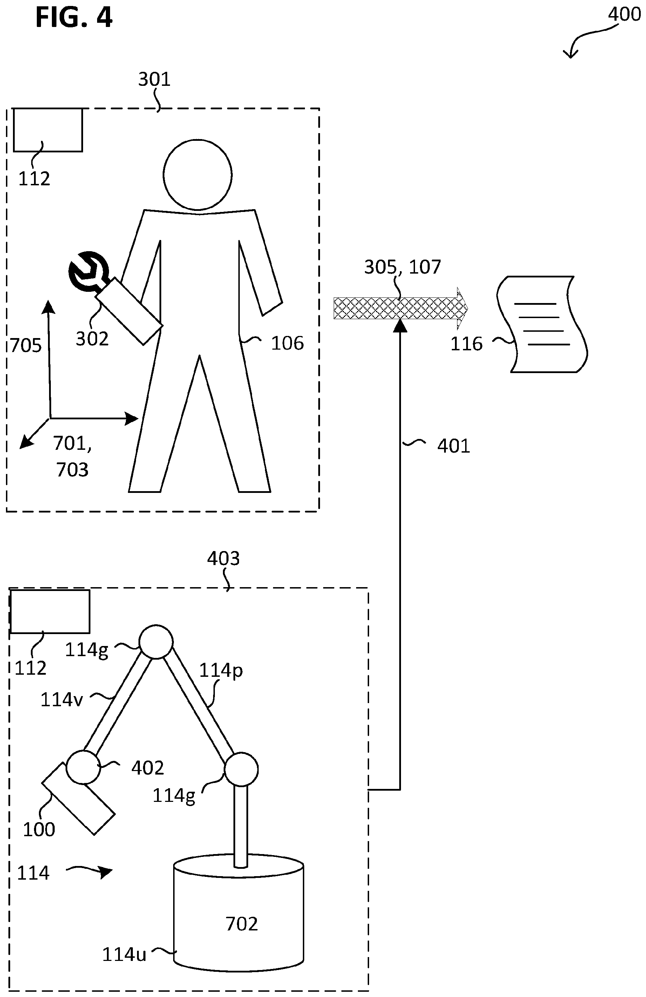

**Fig.4** veranschaulicht das Verfahren 300 gemäß verschiedenen Ausführungsformen in einer schematischen Seitenansicht 400.

Das Verfahren 300 kann in 401 ferner aufweisen: Kalibrieren 403 des Systems 200. Das Kalibrieren kann aufweisen, eine Kalibrierungssequenz durchzuführen, wenn das Handgerät 100 an der Maschine 114 befestigt ist, z.B. an dessen Manipulator. Dazu kann das System 200 eine Befestigungsvorrichtung 402 aufweisen, mittels welcher das Handgerät 100 lösbar an die Maschine 114 gekuppelt werden kann. Die Befestigungsvorrichtung 402 kann beispielsweise eingerichtet sein zum magnetischen Befestigen, zum formschlüssigen und/oder kraftschlüssigen Befestigen, z.B. mittels eines Clips mittels eines Klettbands oder mittels eines andren Formschlusselements (z.B. Schrauben).

Die Kalibrierungssequenz kann aufweisen: Bewegen des Endeffektors 114w der Maschine 114, z.B. indem ein oder mehr als ein (z.B. jedes) Stellglied der kinematischen Kette der Maschine 114 angesteuert wird; und Erfassen der räumlichen Information des Handgeräts 100 (z.B. analog zu 301). Beispielsweise können die Position und/oder Bewegung des Handgeräts 100 in Bezug auf das Koordinatensystem der Maschine und/oder ein globales Koordinatensystem kalibriert werden. Auf Grundlage der dadurch erhaltenen Informationen kann das Modell 114m der Maschine 114 (beispielsweise das Steuerungsmodell, beispielsweise ein maschinentypspezifische Modell bzw. die Deltabildung) aktualisiert 401 werden.

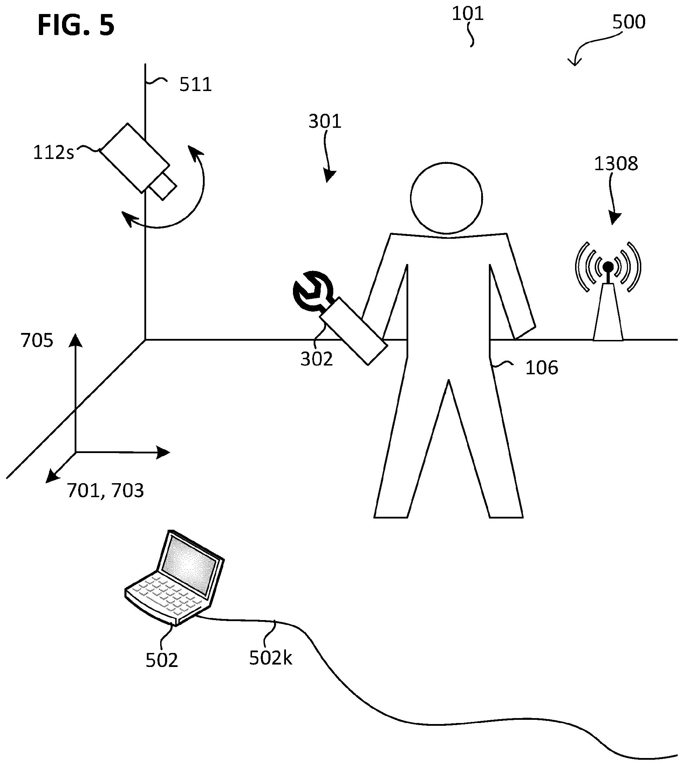

Optional kann nachfolgend der Programmcode 116 generiert werden. Der Programmcode 116 kann dann auf Grundlage des aktualisierten Modells 114m der Maschine 114 erzeugt 107 werden. Der Programmcode 116 muss aber nicht notwendigerweise erzeugt werden. Beispielsweise kann das Angelernte direkt auf der Steuervorrichtung der Datenverarbeitungsanlage 502 (vgl. Fig.5) ausführt werden, um die Maschine anzusteuern, wie nachfolgend genauer beschrieben wird.

Die Kalibrierungssequenz kann anschaulich ein Einmessen des Roboters 114 im globalen Koordinatensystem ermöglichen.

Das Verfahren 300 kann alternativ oder zusätzlich zu dem Kalibrieren 403 des Systems 200 Folgendes aufweisen: Ausführen der an die Maschine 114 zu übermittelnden Steuerinformationen (z.B. in Form des Programmcodes, in Form des Prozessmodells 104m und/oder in Form der Trainingsdaten) mittels des Modells 114m der Maschine 114. In dem kann das Modell 114m der Maschine 114 eingerichtet sein, die Arbeitsweise der Maschine 114 zu emulieren. Das Modell 114m der Maschine 114 kann beispielsweise ein virtuelles Abbild der Maschine 114 aufweisen.

Anschaulich kann das mittels des Modells 114m der Maschine 114 eine Testinstanz bereitgestellt werden, auf welcher die Steuerinformationen auf den Grad ihrer Integrität, ihrer Aufgabenerfüllung und/oder ihrer Konfliktfreiheit getestet werden können.

Optional kann auf einer Grundlage eines Ergebnisses des Ausführens der Steuerinformationen mittels des Modells 114m der Maschine 114 ein Anpassen der Steuerinformationen erfolgen, z.B. manuell und/oder automatisch. Dies ermöglicht es, den Grad der Integrität, den Grad der Aufgabenerfüllung und/oder den Grad der Konfliktfreiheit zu vergrößern.

**Fig.5** veranschaulicht das System 200 gemäß verschiedenen Ausführungsformen in einer schematischen Perspektivansicht 500, das ferner eine Handgerät-externe Vorrichtung aufweist. Die Handgerät-externe Vorrichtung kann eine Datenverarbeitungsanlage 502 aufweisen, welche eingerichtet ist, den Programmcode 116 zu generieren 107 bzw. allgemeiner Steuerungsinformationen zu generieren 107, wie später noch genauer beschrieben wird. Dazu können der Datenverarbeitungsanlage 502 die Trainingsdaten bereitgestellt werden, z.B. indem diese von der Ortungsvorrichtung 112 und/oder von dem Handgerät 100 an die Datenverarbeitungsanlage 502 übermittelt werden. Das Übermitteln kann beispielsweise gemäß einem drahtlos-Kommunikationsprotokoll erfolgen.

Die Datenverarbeitungsanlage 502 kann von der Maschine 114 separat sein oder aber auch Teil dieser sein. Die Datenverarbeitungsanlage 502 der Maschine 114 kann beispielsweise deren Steuervorrichtung aufweisen oder daraus gebildet sein, z.B. eine speicherprogrammierbares System aufweisend. Anschaulich können die Trainingsdaten auf einer von der Maschine separaten Datenverarbeitungsanlage 502 verarbeitet und später auf die Robotersteuerung übertragen werden. Alternativ oder zusätzlich können die Trainingsdaten (z.B. teilweise oder vollständig) auf der Robotersteuerung selbst verarbeitet werden. Ebenso kann, z.B. wenn das Generieren des Programmcodes 116 weggelassen wird, die Maschine mittels der von der Maschine separaten Datenverarbeitungsanlage 502 direkt angesteuert werden. Im letzteren Fall kann die Datenverarbeitungsanlage 502 einen oder mehr als einen Steuerbefehl ermitteln auf Grundlage der Steuerinformationen und die Maschine ansteuern mittels des Steuerbefehls, z.B. über eine Programmierschnittstelle und/oder mittels eines Programmierkommunikationsprotokolls (API). Dann können die im Folgenden näher beschriebenen Schritte 305, 307, 316 weggelassen werden.

Im Folgenden wird auf eine von der Maschine separate Datenverarbeitungsanlage 502 Bezug genommen. Das Beschriebene kann in Analogie auch für eine Datenverarbeitungsanlage 502 gelten, die in die Maschine 114 integriert ist und/oder der Maschine die Steuerbefehle direkt bereitstellt.

Die Datenverarbeitungsanlage 502 kann optional kommunikativ mit der Maschine 114 gekoppelt 502k sein, z.B. mit der Maschinensteuerung 702, z.B. wenn diese von der Maschine 114 separat ist, oder eine Komponente der Maschine 114 sein. Die kommunikative Kopplung 502k kann beispielsweise mittels eines Kabels 502k bereitgestellt sein oder alternativ auch drahtlos. Mittels der Kopplung 502k kann das Ansteuern der Maschine 114 erfolgen, z.B. gemäß der Kalibrierungssequenz. Alternativ oder zusätzlich kann mittels der Kopplung 502k der erzeugte Programmcode 116 zu der Maschine 114 übertragen werden. Das Kommunizieren mit der Maschine 114 kann gemäß einem Kommunikationsprotokoll der Maschine erfolgen, z.B. gemäß einem Programmier- Kommunikationsprotokoll, einem Netzwerk- Kommunikationsprotokoll und/oder einem Feldbus-Kommunikationsprotokoll. Die Codegenerierung 107 und/oder das Kommunizieren mit der Maschine 114 können somit für eine oder mehr als eine Maschine 114, optional unterschiedlichen Typs, optional mit der Berücksichtigung möglicher verschiedener SPS-Steuerungssysteme, bereitgestellt werden.

Die Datenverarbeitungsanlage 502 kann, wenn diese eine erste Aktivierungsinformation empfängt, beginnen, die Trainingsdaten aufzuzeichnen (auch als Aktivieren des Trainierens bezeichnet). Das Aufzeichnen von Daten durch die Datenverarbeitungsanlage 502 kann selbstverständlich auch schon vorher beginnen. Die Trainingsdaten bezeichnen dann denjenigen Teil der Daten, der zum Trainieren auch verwendet wird. Dazu kann ein Filtern der aufgezeichneten Daten erfolgen, beispielsweise manuell oder an einem Tablet.

Die Datenverarbeitungsanlage 502 kann, wenn diese eine zweite Aktivierungsinformation empfängt, das Aufzeichnen der Trainingsdaten zu beenden (auch als Deaktivieren des Trainierens bezeichnet). Das Aktivieren und Deaktivieren können wiederholt werden und die so aufgezeichneten Trainingsdaten konsolidiert werden. Auf Grundlage der Trainingsdaten kann dann der Programmcode 116 erzeugt 107 werden.

Die Datenverarbeitungsanlage 502 kann beispielsweise ein softwaregestütztes Verfahren 300 zum Anlernen eines Industrieroboters 114 ermöglichen, welches auch einem technischen Laien 106 zugänglich ist. So kann beispielsweise ein nicht-Programmierer 106 in die Lage versetzt werden, einen Industrieroboter 114 voll integriert anzulernen.

Mittels des Verfahrens 300 kann zumindest ein Aufgabenexperte 106 (z.B. ein Mechaniker oder ein Schweißer) eine oder mehr als eine Tätigkeit des Prozessablaufs beispielhaft mittels des Trainiergeräts 302 demonstrieren. Darauf basierend kann die notwendige Steuerungssoftware 116 des Roboters 114, inklusive sämtlicher benötigten Softwarekomponenten, vollständig automatisiert generiert werden.

Das Verfahren 300 kann in 301 aufweisen: Erfassen der Trainingsdaten mittels eines oder mehr als eines Sensors der Ortungsvorrichtung 112 und/oder des Trainiergeräts 302 (z.B. dessen Handgeräts 100). Beispielsweise kann das Handgerät 100 seine Lage und/oder Beschleunigung als Teil der Trainingsdaten bereitstellen. Alternativ oder zusätzlich kann zumindest ein Sensor der Ortungsvorrichtung 112 (auch als externer Sensor bezeichnet) die Lage und/oder die Beschleunigung des Trainierwerkzeugs 214 und/oder des Handgeräts 100 als Teil der Trainingsdaten bereitstellen. Es können auch andere Messgrößen erfasst werden, welche einen Ist-Zustand des Trainierwerkzeugs 214 und/oder des Handgeräts 100 repräsentieren, z.B. deren Trajektorie 111 (z.B. Lage und/oder Bewegung). Optional kann die Eingabeeinheit 108 zumindest einen Sensor aufweisen, der eine Handhabung gemäß der Tätigkeit als Teil der Trainingsdaten erfasst. Die Trainingsdaten können an die Datenverarbeitungsanlage 502 (z.B. ein PC, ein Laptop, usw.) übertragen werden, welche mittels ihrer Kommunikationseinheit (z.B. per Funk) mit der Ortungsvorrichtung 112 und/oder mit dem Handgerät 100 (z.B. dessen Ausgabeeinheit 110) kommunikativ verbunden ist.

Die Ortungsvorrichtung 122 kann optional ein Ortungssignal emittieren mittels einer Ortungssignalquelle 1308 (z.B. einem Infrarotlaser), wie später noch genauer beschrieben wird.

Optional kann die Datenverarbeitungsanlage 502 eine Systemverwaltung implementieren, mittels welcher die Komponenten des Systems verwaltet und/oder registriert werden können. Beispielsweise kann eine Komponente, dies sich im System anmeldet, als Komponente des Systems registriert sein oder werden, z.B. das Handgerät 100 und/oder der Wechselaufsatz 210. So können auch mehrere Wechselaufsätze 210 und/oder mehrere Handgeräte 100 pro System verwaltet werden.

Hierin wird darauf Bezug genommen, dass die Eingabeeinheit 108 eine Komponente des Handgeräts 100 ist (auch als Handgerät-interne Eingabeeinheit 108 bezeichnet). Das Beschriebene kann in Analogie für eine Handgerät-externe Eingabeeinheit gelten. Die Handgerät-externe Eingabeeinheit kann beispielsweise alternativ oder zusätzlich zu der Handgerät-internen Eingabeeinheit 108 bereitgestellt sein oder werden. Beispielsweise kann die Handgerät-externe Eingabeeinheit mittels einer Handgerät-externen Vorrichtung (auch als Handgerät-externe Aktivierungsvorrichtung bezeichnet) bereitgestellt sein. Die Handgerät-externe Aktivierungsvorrichtung kann beispielsweise ein Smartphone, ein Funkschalter, ein Wechselaufsatz (wie später noch genauer beschrieben wird), oder die oder eine zusätzliche Rechenanlage 502 aufweisen oder daraus gebildet sein. Die Handgerät-externe Eingabeeinheit kann anschaulich dieselbe Funktion wie die Handgerät-interne Eingabeeinheit 108 bereitstellen, so dass das Eingeben von Aktivierungsinformation für das Aktivieren des Trainierens der Maschine mittels der Handgerät-externen Eingabeeinheit erfolgt. Die Handgerät-externe Eingabeeinheit muss nicht notwendigerweise eine physische Eingabeeinheit sein, sondern kann auch eine emulierte oder virtuelle Eingabeeinheit sein.

Die Handgerät-externe Aktivierungsvorrichtung kann beispielsweise im System registriert sein und optional mit derjenigen Komponente des Systems (auch als Verarbeitungskomponente bezeichnet) Daten austauschen, welche die Trainingsinformationen aufzeichnet und/oder verarbeitet, z.B. drahtlos. Die Verarbeitungskomponente des Systems kann beispielsweise die Steuervorrichtung des Handgeräts 100, wenn diese die Datenverarbeitungsanlage 502 aufweist, oder die Steuervorrichtung der Maschine, wenn diese die Datenverarbeitungsanlage 502 aufweist. Alternativ kann die Handgerät-externe Aktivierungsvorrichtung die Trainingsinformationen selber aufzeichnen und/oder verarbeiten.

Im Allgemeinen kann das System eine oder mehr als eine Handgerät-externe Vorrichtung aufweisen, von denen zumindest eine Handgerät-externe Vorrichtung die Trainingsdaten verarbeitet (d.h. die Verarbeitungskomponente bereitstellt) und zumindest eine oder die Handgerät-externe Vorrichtung optional die Eingabeeinheit bereitstellt.

Die Handgerät-externe Aktivierungsvorrichtung kann beispielsweise ein beidhändiges Trainieren der Maschine ermöglichen.

In Analogie dazu kann die Handgerät-externe Aktivierungsvorrichtung eine Handgerät-externe Ausgabeeinheit aufweisen, welche alternativ oder zusätzlich zu der Ausgabeeinheit 110 des Handgeräts 100 (auch als Handgerät-interne Ausgabeeinheit bezeichnet) bereitgestellt sein oder werden kann. Die Handgerät-externe Ausgabeeinheit kann eingerichtet sein zum Ausgeben der Aktivierungsinformation für das Aktivieren des Trainierens der Maschine 114 an.

Die (Handgerät-interne und/oder Handgerät-externe) Eingabeeinheit kann optional eine Sprachsteuerung oder Gestensteuerung implementieren zum Eingeben von Aktivierungsinformation. Alternativ oder zusätzlich können das Handgerät 100 und/oder die Handgerät-externe Aktivierungsvorrichtung eine Sprachsteuerung oder Gestensteuerung implementieren zum Eingeben von Trainingsdaten. Beispielsweise kann ermöglicht werden, dass der Nutzer sprachbasiert oder gestenbasiert einen oder mehr als einen Parameter der zu trainierenden Tätigkeit (z.B. tätigkeitsspezifischen und/oder werkzeugspezifischen Prozessparameter) eingibt. Beispielsweise kann der Nutzer sprachbasiert oder gestenbasiert einen Durchflussrate angeben.

Alternativ oder zusätzlich zu der Gestensteuerung kann beispielsweise eine Muskelspannungssteuerung implementiert werden. Dies kann beispielsweise ein Erfassen von Gesten oder des Parameters ermöglichen auf Grundlage der Muskelspannung des Nutzers. Die Gestensteuerung kann beispielsweise mittels der Muskelspannungssteuerung und/oder auch mittels einer Videokamera implementiert werden, welche das Verhalten des Nutzers erfassen.

Allgemeiner gesprochen können die Aktivierungsinformation und/oder der eine oder mehr als eine Parameter der anzutrainierenden Tätigkeit auf Grundlage eines (z.B. berührungslos) erfassten Nutzerverhaltens (z.B. Sprache, Mimik, Gestik, Bewegung, usw.) ermittelt werden. Beispielsweise kann mittels des Nutzerverhaltens ermittelt werden, dass das Trainieren gestartet, unterbrochen und/oder beendet werden soll.

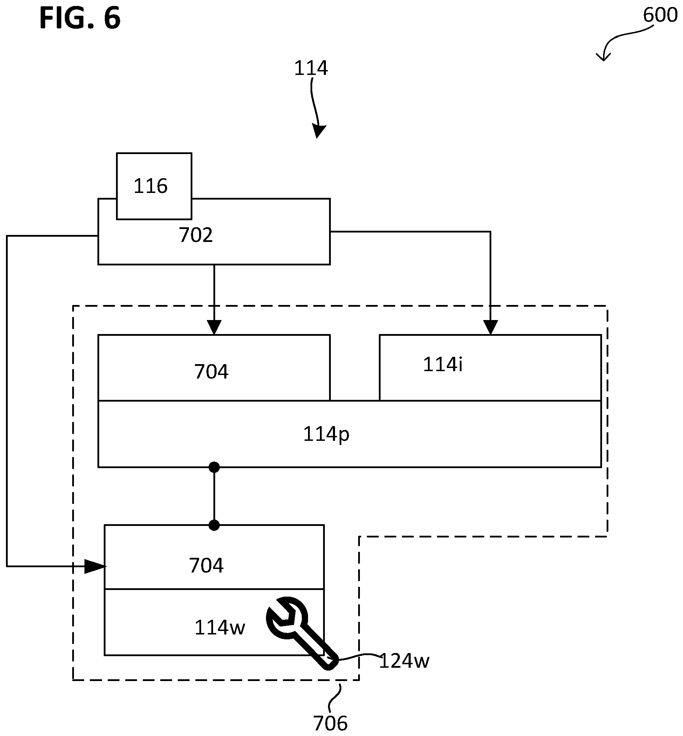

**Fig.6** veranschaulicht eine Maschine 114 gemäß verschiedenen Ausführungsformen in einem schematischen Aufbaudiagram 600.

Die Maschine 114 kann hierin eine mittels eines Steuerungsprograms 116 programmierbare Maschine sein. Einmal programmiert, kann die Maschine 114 eingerichtet sein, eine oder mehr als eine Prozesstätigkeit autonom durchzuführen, und optional die Prozesstätigkeit (d.h. die Ausführung der Aufgabe) abhängig von Sensorinformationen in Grenzen zu variieren. Die Steuervorrichtung 702 kann beispielsweise ein speicherprogrammierbares System (SPS) aufweisen.

Die Maschine 114 kann eine Steuervorrichtung 702 aufweisen, welche eingerichtet ist, zumindest ein Stellglied 704 (auch als Aktor bezeichnet) der Maschine 114 anzusteuern gemäß dem Steuerungsprogram 116. Die Steuervorrichtung 702 kann beispielsweise einen oder mehr als einen Prozessor und/oder ein Speichermedium aufweisen. Der Manipulator der Maschine 114 kann eine kinematische Kette 706 aufweisen, entlang welcher eine Wirkung des zumindest einen Stellglieds 704 übertragen wird, z.B. entlang der Kopplung der Glieder der kinematischen Kette 706 untereinander.

Die kinematische Kette 706 kann eine Positionierungsvorrichtung 114p und einen mittels der Positionierungsvorrichtung 114p positionierbaren Endeffektor 114w aufweisen. Als Endeffektor 114w kann das letzte Glied der kinematischen Kette 706 der Maschine 114 verstanden werden, welches eingerichtet ist, unmittelbar auf ein Werkstück einzuwirken, z.B. dieses zu bearbeiten (d.h. dieses zu prozessieren). Die Summe aller Vorgänge, wie beispielsweise das Einwirken auf das Werkstück, beispielsweise ein Vorbereitungsschritt dazu oder beispielsweise ein Nachbereitungsschritt dazu, kann Teil der Prozesstätigkeit sein. Die Prozesstätigkeit kann beispielsweise ein Urformen, ein Inspizieren, Fügen (z.B. Schweißen, Beschichten, Verschrauben, Einstecken, Kontaktieren, Kleben oder anderweitig Montieren bzw. Zusammensetzen), Trennen (z.B. Schleifen, Fräsen, Sägen oder anderweitig Zerspanen, Stanzen oder Zerlegen), Umformen, Erwärmen, Verlagern (z.B. Greifen, Bestücken, Drehen oder Verschieben), oder Ähnliches aufweisen. Die Prozesstätigkeit kann bahn-basiert sein, d.h. mittels Bewegens des Endeffektors 114w entlang einer Trajektorie 113 abgebildet werden.

Die Positionierungsvorrichtung 114p kann zumindest ein Stellglied 704 aufweisen, welches eingerichtet ist, den Endeffektor 114w zu verlagern zu einer Position (auch als Positionieren bezeichnet). Der Endeffektor 114w kann zumindest ein Stellglied 704 aufweisen, welches eingerichtet ist, die Prozesstätigkeit auszuführen, z.B. mittels eines Werkzeugs 124w des Endeffektor 114w. Das Werkzeug 124w kann allgemein eine der Prozesstätigkeit gemäße Funktion bereitstellen, mittels welcher auf das Werkstück eingewirkt wird. Das Werkzeug kann beispielsweise ein Urformen-Werkzeug, ein Fügen-Werkzeug (z.B. Schrauber, Klebepistole oder Schweißgerät), ein Verlagerung-Werkzeug (z.B. Greifer), ein Trennen-Werkzeug oder Ähnliches aufweisen. Das Fügen-Werkzeug kann beispielsweise ein Beschichten-Werkzeug (z.B. eine Lackierpistole, einen Pulverbeschichtung-Pistole) aufweisen oder daraus gebildet sein.

Optional kann die Maschine 114 zumindest einen internen Sensor 114i aufweisen, welcher eingerichtet ist, einen Arbeitspunkt der kinematischen Kette 706 zu erfassen, z.B. um eine Regelung zu implementieren. Der interne Sensor 114i kann beispielsweise Bestandteil eines Schrittmotors sein, der seinen aktuellen Arbeitspunkt (z.B. seine Position) erfasst. Alternativ oder zusätzlich zu dem zumindest einen internen Sensor 114i kann die Maschine 114 auch von ihrem Gestell und/oder ihrem Endeffektor externen Sensor 114i aufweisen, z.B. eine Kamera, welche die Maschine 114 visuell erfasst.

Wird die Prozesstätigkeit von der programmierbaren Maschine 114 nachempfunden, kann die Maschine 114 als Ganze in einen Arbeitspunkt gebracht werden, welcher der Prozesstätigkeit gemäß der räumlichen Information möglichst nahe kommt. Der Arbeitspunkt kann beispielsweise definieren, auf welche Position der Endeffektor 114w gebracht (mittels Bewegens dieser) und welche Wirkung dieser dort bereitstellen soll. Der Arbeitspunkt kann beispielsweise die Summe an Zuständen der einzelnen Stellglieder 704 der Maschine 114 beschreiben.

Das Speichermedium kann Teil der Steuervorrichtung 702 und/oder separat davon bereitgestellt sein oder werden. Das Speichermedium kann beispielsweise ein elektronisches Halbleiter-Speichermedium aufweisen, z.B. ein Festwertspeicher (ROM) oder ein Direktzugriffsspeicher (RAM), eine Speicherkarte aufweisen, einen Flash-Speicher aufweisen, einen Stick aufweisen für einen universellen seriellen Bus (USB-Stick), ein Festkörperlaufwerk (SSD) aufweisen, ein Festplattenlaufwerk (HDD) aufweisen, eine Speicherplatte (MD) aufweisen, ein holographisches Speichermedium aufweisen, ein optisches Speichermedium aufweisen, eine Compact-Disc aufweisen, eine Digital-versatile-Disc (DCV) aufweisen, und/oder eine magneto-optische Platte aufweisen.

Vorstehend wurde das Trainieren unter Bezugnahme auf eine Maschine 114 beschrieben. In Analogie kann das Beschriebene für eine Vielzahl von separaten, z.B. untereinander kommunizierenden, Maschinen 114 (z.B. eine Verfahrensstraße) gelten, wie auch für eine Maschine, die mehrere Positionierungsvorrichtungen und/oder Endeffektoren aufweist.

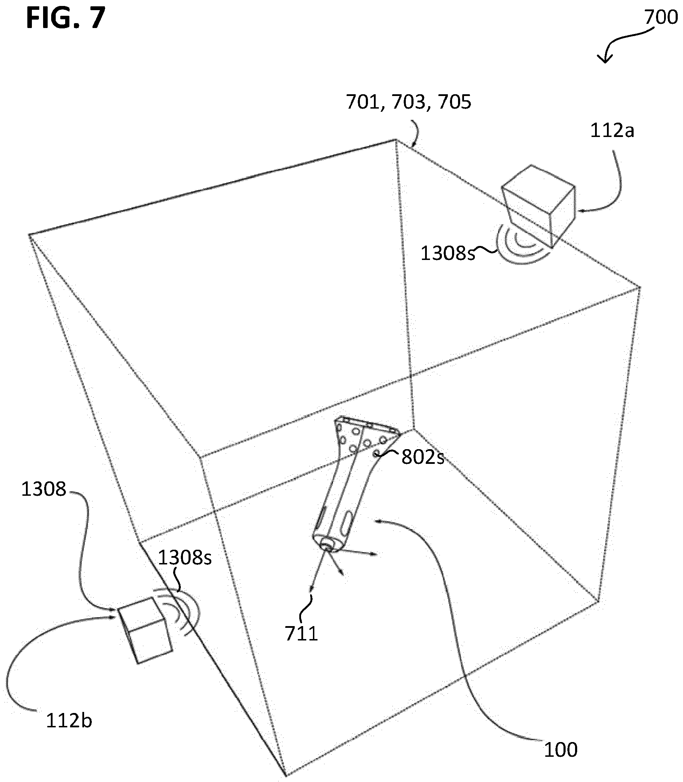

**Fig.7** veranschaulicht ein System 700 gemäß verschiedenen Ausführungsformen in einer schematischen Perspektivansicht, z.B. eingerichtet wie das System 200, wobei das System 700 das Handgerät 100 und eine Ortungsvorrichtung 112 aufweist, wobei die Ortungsvorrichtung 112 mehrere Ortungseinheiten 112a, 112b aufweist. Jede der Ortungseinheiten 112a, 112b kann eingerichtet sein, eine Lagebestimmung des Handgeräts 100 durchzuführen, z.B. mittels einer Nachverfolgung (das sogenannte "tracking"). Alternativ oder zusätzlich kann das Handgerät 100 selbst eingerichtet sein, eine Lagebestimmung durchzuführen. Beispielsweise können die Ortungseinheiten 112a, 112b eingerichtet sein, ein optisches Muster in den Raum zu projizieren (z.B. mittels eines Infrarotlasers), welches von einem oder mehr als einem optoelektronischen Sensor des Handgeräts 100 erfasst werden kann.

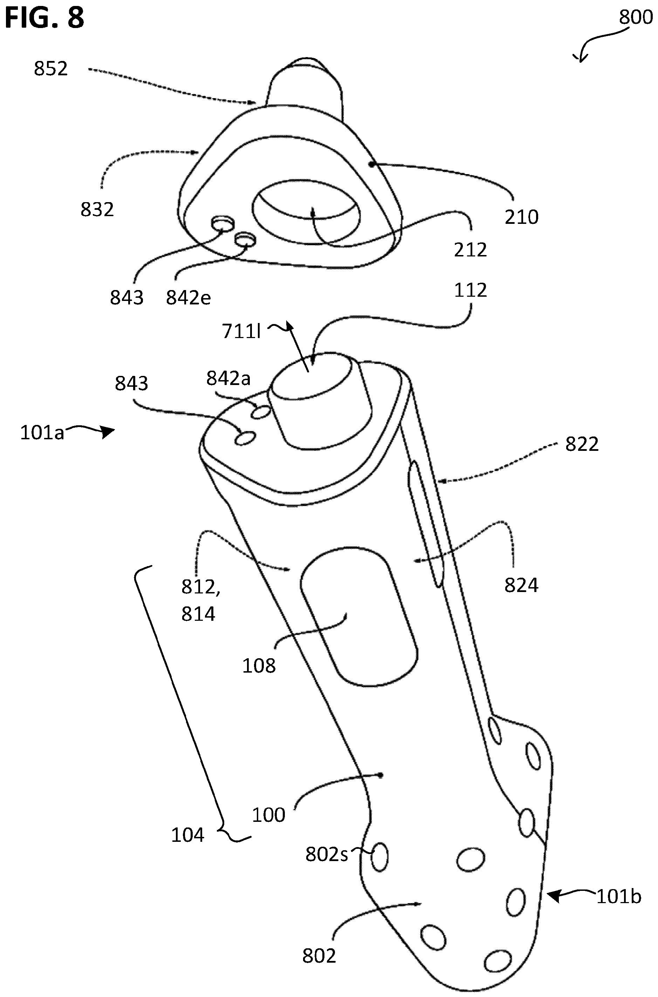

**Fig.8** veranschaulicht ein System 800, z.B. eingerichtet wie das System 200 oder 700, gemäß verschiedenen Ausführungsformen in einer schematischen Perspektivansicht. Entlang der Längsrichtung 711a kann das Handgerät 104 von zwei Stirnseiten 101a, 101b begrenzt sein, von denen eine zweite Stirnseite 101b der Kupplungsstruktur 102 gegenüberliegt und einen Sensorabschnitt802 (allgemeiner auch als Ortungsabschnitt 802 bezeichnet) aufweist. Die Längsrichtung 711a des Handgeräts 100 kann von der zweiten Stirnseite zu der ersten Stirnseite 101a hin gerichtet sein. Der Sensorabschnitt 802 kann einen oder mehr als einen (z.B. optoelektronischen) Sensor aufweisen, wie vorstehend beschrieben ist, die zur Ermittlung der Trainiertrajektorie 111 verwendet werden können, z.B. mindestens 3 (4, 5 oder mindestens 10) Sensoren.

Alternativ oder zusätzlich zu den Sensoren kann in dem Ortungsabschnitt 802 einen oder mehr als einen Emitter angeordnet sein (auch dann auch als Emitterabschnitt 802 als bezeichnet), welcher mit der Ortungsvorrichtung 112 kommuniziert. Die Ortungsvorrichtung 112 kann dann die von den Emittern empfangenen Signale dem Erfassen der räumlichen Information des Handgeräts 100 zuführen. Im Folgenden wird auf die Sensoren des Abschnitts 802 Bezug genommen. Das für die Sensoren des Abschnitts 802 Beschriebene kann in Analogie auch für die Emitter des Emitterabschnitts 802 gelten, wobei beispielsweise dann die Signalrichtung umgekehrt wäre.

Je mehr Sensoren der Sensorabschnitt 802 aufweist, desto größer kann die Genauigkeit der Positionsbestimmung. Optional können sich zumindest zwei (oder mehrere jeweils paarweise) Sensoren des Sensorabschnitts 802 in ihrer Ausrichtung voneinander unterschieden. Dies erleichtert eine rundum-Erfassung.

Der Griff 104 kann einen kleineren Umfang (z.B. entlang eines in sich geschlossenen Pfades, der quer zur Längsrichtung 711a verläuft), aufweisen als der Sensorabschnitt 802. Mit anderen Worten kann der Sensorabschnitt 802 aufgeweitet sein. Alternativ oder zusätzlich können zumindest zwei Sensoren des Sensorabschnitts 802 einen Abstand (auch als Sensorabstand bezeichnet) voneinander aufweisen, welcher größer ist als eine Ausdehnung des Griffs 104 (auch als Querausdehnung bezeichnet). Die Querausdehnung und/oder der Sensorabstand können quer zu der Längsrichtung 711a und/oder parallel zueinander sein. Dies erhöht die Genauigkeit der Positionsbestimmung. Anschaulich kann die Genauigkeit zunehmen, je größer die Abstände zwischen den Sensoren untereinander sind und/oder je größer die von den Sensoren aufgespannte Fläche (auch als Sensorbereich bezeichnet) ist.

Optional kann ein oder mehr als ein Sensor des Handgeräts, der zur Ermittlung der Trainiertrajektorie 111 verwendet wird, innerhalb des Griffs 104 angeordnet sein, z.B. ein Rotationssensor 812 und/oder ein Lagesensor 814. Die erhöht die Genauigkeit des Ermittelns der Trainiertrajektorie 111, z.B. aufgrund des Abstandes zu dem Sensorabschnitt 802.

Die Anordnung des Sensorabschnitts (z.B. mit optoelektronischen Sensoren) an der zweiten Stirnseite 101b und/oder entfernt vom Griff minimiert eine Verdeckung der Sensoren des Sensorabschnitts und erleichtert damit das Ermitteln der räumlichen Information.

Das Handgerät 100 kann eine oder mehr als eine Rückmeldeeinheit (auch als Signalgeber bezeichnet) aufweisen, z.B. eine optische Rückmeldeeinheit 822 (z.B. eine Lichtquelle aufweisend), z.B. eine haptische Rückmeldeeinheit 824 (z.B. eine Vibrationsquelle aufweisend, z.B. einen Unwuchtmotor aufweisend), und/oder eine akustische Rückmeldeeinheit (z.B. einen Lautsprecher aufweisend).

Der Wechselaufsatz 210 kann optional einen Schaltkreis 852 aufweisen, der eingerichtet ist eine Funktion zu implementieren. Die Funktion des Wechselaufsatzes 210 kann gemäß der anzutrainierenden Tätigkeit eingerichtet sein und/oder mittels einer Handhabung des Handgeräts 100 (z.B. dessen Eingabeeinheit 108) angesteuert werden. Alternativ oder zusätzlich kann der Wechselaufsatz eine Eingabeeinheit aufweisen, mittels welcher beispielsweise eine Handhabung gemäß der Tätigkeit erfasst werden kann oder die Funktion des Wechselaufsatzes bedient werden kann.

Die Funktion des Wechselaufsatzes 210 kann beispielsweise mittels der Eingabeeinheit des Wechselaufsatzes 210 und/oder des Handgeräts 100 (allgemeiner des Trainiergeräts 302) angesteuert werden. Beispielsweise kann mittels der Eingabeeinheit eine Greifbewegung eines Greifers ausgelöst und/oder gesteuert werden.

Beispiele für die Funktion des Wechselaufsatzes 210 können aufweisen: Erfassen einer auf den Wechselaufsatz 210 wirkenden physikalischen Größe (dazu kann der Schaltkreis zumindest einen Sensor aufweisen), Emittieren von Strahlung (dazu kann der Schaltkreis zumindest eine Strahlungsquelle aufweisen, z.B. eine Lichtquelle), Austauschen von Daten (dazu kann der Schaltkreis zumindest eine Zusatzschnittstelle aufweisen), Bewegen einer oder mehr als einer Komponente des Wechselaufsatzes 210. Die Funktion kann beispielsweise gemäß der Prozesstätigkeit eingerichtet sein.

Das Handgerät 100 kann eingerichtet sein, den Schaltkreis 852 mit Energie zu versorgen und/oder mit diesem Daten auszutauschen. Beispielsweise kann der Sensor des Schaltkreises 852 ausgelesen werden und die ausgelesenen Daten können mittels der Ausgabeeinheit 110 an die Datenverarbeitungsanlage übermittelt werden. Beispielsweise kann die Strahlungsquelle angepasst werden (z.B. deren Strahlungsintensität, deren Öffnungswinkel, deren Strahlungswellenlänge, usw.). Beispielsweise kann die Strahlungsquelle eine Lichtquelle, eine Ultraviolettstrahlungsquelle (z.B. zum Härten von Klebstoff) oder Wärmestrahlungsquelle (z.B. einen Strahlungsheizer) aufweisen. Mittels der Lichtquelle (anschaulich sichtbares Licht emittierend) kann beispielsweise ein ausgeleuchteter Bereich auf das Werksstück projiziert werden, der beispielsweise zum Inspizieren des Werksstücks dient oder eine Stelle des Werksstücks markiert, der bearbeitet werden soll.

Das Versorgen des Schaltkreises 852 mit Energie und/oder das Austauschen von Daten mit dem Schaltkreis 852 können beispielsweise kabelgebunden (mittels einer kontakt-Wechselaufsatzschnittstelle) erfolgen. Dazu kann das Handgerät 100 beispielsweise eine Energieleitung aufweisen, deren Ausgang 842a an der ersten Stirnseite 101a des Handgeräts einen ersten Kontakt bereitstellt. Dazu korrespondierend kann der Schaltkreis 852 eine Energieleitung aufweisen, deren Eingang 842e einen zweiten Kontakt bereitstellt. Der erste Kontakt und der zweite Kontakt können, wenn der Wechselaufsatz 210 an dem Handgerät 100 angekuppelt ist, elektrisch und/oder physisch miteinander verbunden sein (auch als Energieversorgungsverbindung bezeichnet). In analoger Weise kann eine Datenaustauschverbindung mittels Kontakten 843 bereitgestellt sein. Der Wechselaufsatzes 210 kann alternativ oder zusätzlich eine elektrische Energiequelle (z.B. eine Batterie) aufweisen, welche zum Versorgen des Schaltkreises 852 mit Energie eingerichtet ist.

Allgemeiner gesprochen können der Wechselaufsatzes 210 und das Handgerät 100 (z.B. deren Batterien) elektrische Energie zum Versorgen austauschen, z.B. von dem Wechselaufsatzes 210 zu dem Handgerät 100 oder andersherum. Beispielsweise kann der Wechselaufsatzes 210 auch genutzt werden, um die Batterie des Handgeräts 100 aufzuladen oder autark von der Batterie des Handgeräts 100 betrieben werden.

Auf dieselbe Weise können der Wechselaufsatzes 210 und das Handgerät 100 Daten austauschen, z.B. von dem Wechselaufsatzes 210 zu dem Handgerät 100 oder andersherum. Beispielsweise kann die Funktion der Eingabeeinheit 108 des Handgeräts 100 auf eine Eingabeeinheit des Wechselaufsatzes 210 übertragen werden, so dass das Eingeben von Aktivierungsinformation für das Aktivieren des Trainierens der Maschine (beispielsweise wahlweise oder nur) an dem Wechselaufsatz 210 erfolgen kann. Die Eingabeeinheit des Wechselaufsatzes 210 kann beispielsweise mittels der mittels Kontakte 843 mit der Steuervorrichtung des Handgeräts 100 Daten austauschen.

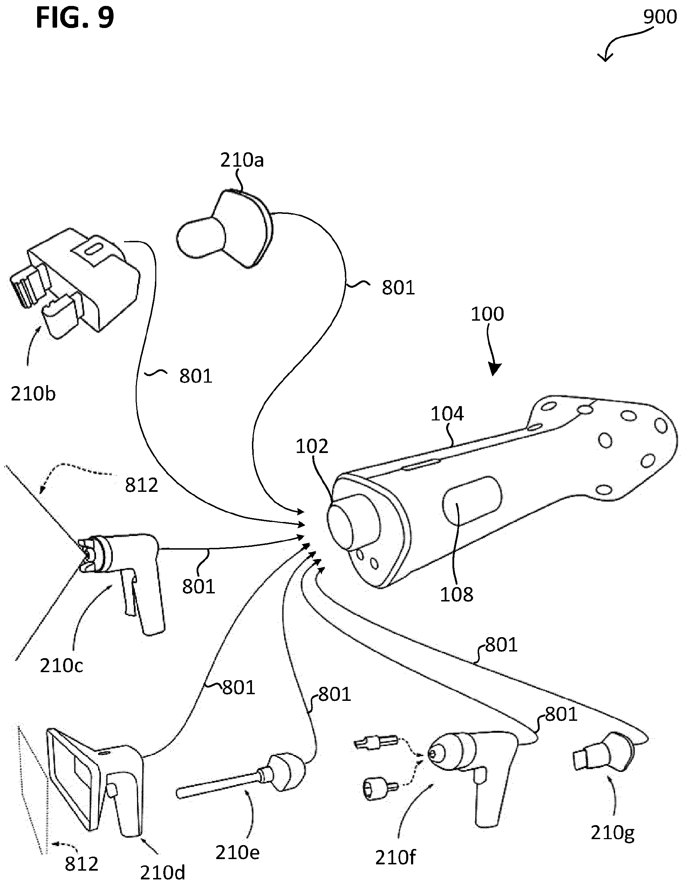

Beispielsweise kann der Wechselaufsatz 210 auch eine Hülse aufweisen, in welche den Griff und/oder die Eingabeeinheit 108 des Handgeräts 100 zumindest teilweise (d.h. teilweise oder vollständig) eingesteckt werden kann und/oder welche diese zumindest teilweise verdeckt (vgl. beispielsweise Wechselaufsatz 210f in Fig.9). Beispielsweise kann die Hülse eine Aussparung aufweisen, in welcher der Griff und/oder die Eingabeeinheit 108 des Handgeräts 100 eingesteckt werden kann. Dies ermöglicht eine individuellere Anpassung des Trainiergeräts 302 an die zu trainierende Tätigkeit. Optional kann ein solcher Wechselaufsatz 210 eingerichtet sein, beim Ankuppeln an das Handgerät 100, die Funktion der Eingabeeinheit 108 zu übernehmen, so dass das Eingeben der Aktivierungsinformation für das Aktivieren des Trainierens der Maschine an dem Wechselaufsatz 210 erfolgen kann.

Die Datenaustauschverbindung und/oder Energieversorgungsverbindung kann aber auch drahtlos (mittels einer drahtlos-Wechselaufsatzschnittstelle) erfolgen.

Beispielsweise kann die Energie drahtlos mittels Induktion in den Schaltkreis 852 eingekoppelt werden. Beispielsweise können die Daten per Funk ausgetauscht werden, z.B. per Bluetooth und/oder RFID. Alternativ oder zusätzlich können die Daten (z.B. in Form eines Datensignals) einem Signal (z.B. dem Strom und/oder der Spannung) der Energieversorgungsverbindung aufmoduliert sein (auch als Trägerfrequenztechnik bezeichnet). Das Datensignal kann beispielsweise auf ein oder mehr als ein Trägersignal der Energieversorgungsverbindung aufmoduliert werden.

Die Kupplungsstruktur 102 und die Gegen-Kupplungsstruktur 212 können beispielsweise eine Einsteckkupplung bereitstellen.

**Fig.9** veranschaulicht ein System 900, z.B. eingerichtet wie eines der Systeme 200, 700 oder 800, gemäß verschiedenen Ausführungsformen in einer schematischen Perspektivansicht, wobei das System 900 das Handgerät 100 und mehrere Wechselaufsätze 210a bis 210g aufweist. Aus den mehreren Wechselaufsätzen 210a bis 210g kann wahlweise (z.B. immer genau) ein Wechselaufsatz mit der Kupplungsstruktur 102 gekuppelt sein oder werden.

Die mehrere Wechselaufsätze 210a bis 210g können beispielsweise einen Wechselaufsatz 210b mit Verlagerung-Werkzeug (auch als Pick-and-Place-Werkzeug bezeichnet) aufweisen, z.B. einen Greifer. Das Verlagerung-Werkzeug kann beispielsweise auswechselbare Greiferbacken aufweisen, zwei oder mehr Greiferbacken aufweisen und/oder eine angetriebene Greiffunktion aufweisen. Dazu kann dessen Schaltkreis 852 beispielsweise einen Aktor aufweisen, der die Greiffunktion (z.B. eine Greifereinstellung) antreibt.

Die mehreren Wechselaufsätze 210a bis 210g können beispielsweise einen Wechselaufsatz 210c mit Beschichten-Werkzeug aufweisen. Dieser kann beispielsweise einen Sensor aufweisen, der eine anzutrainierende Durchflussregulierung erfasst.

Die mehrere Wechselaufsätze 210a bis 210g können beispielsweise einen Wechselaufsatz 210d mit Inspizieren-Werkzeug aufweisen. Das Inspizieren-Werkzeug kann beispielsweise eine optische Qualitätssicherung als Tätigkeit repräsentieren. Beispielsweise kann der zu inspizierende Bereich mittels des Inspizieren-Werkzeugs auf das Werksstück projiziert werden.

Die mehreren Wechselaufsätze 210a bis 210g können beispielsweise einen Wechselaufsatz 210e mit Trennen-Werkzeug aufweisen, z.B. ein Entgraten-Werkzeug. Dessen Schaltkreis 852 kann beispielsweise einen Mehrachskraftsensor, eine veränderbare Steifigkeit und/oder eine auswechselbare Entgratspitze aufweisen. Der Mehrachskraftsensor kann beispielsweise eine auf die Entgratspitze wirkende Kraft erfassen. Die Steifigkeit kann beispielsweise eine Kraft repräsentieren, die einer Auslenkung der Entgratspitze gegenüber dem Mehrachskraftsensor entgegenwirkt. Das Entgraten-Werkzeug kann beispielsweise ein Entgraten als Tätigkeit repräsentieren.

Die mehreren Wechselaufsätze 210a bis 210g können beispielsweise einen Wechselaufsatz 210f mit Schraub-Werkzeug aufweisen. Dessen Schaltkreis 852 kann beispielsweise einen Sensor (z.B. einen Ein- oder Mehrachskraftsensor) aufweisen, der eine auf die Schraubspitze einwirkende Kraft erfassen kann. Das Schraub-Werkzeug kann beispielsweise eine auswechselbare Schraubspitze (der Schraub-Endeffektor, z.B. ein Schraubbit) aufweisen.

Die mehrere Wechselaufsätze 210a bis 210g können beispielsweise einen Wechselaufsatz 210g mit Klebe-Werkzeug aufweisen. Das Klebe-Werkzeug kann beispielsweise eine auswechselbare Klebespitze aufweisen. Der Schaltkreis 852 des Wechselaufsatzes 210g kann beispielsweise einen Sensor aufweisen, der einen mittels der Klebespitze überstrichenen Arbeitsbereich erfassen kann, und/oder einen Sensor (z.B. einen Ein- oder Mehrachskraftsensor) aufweisen, der eine auf die Klebespitze einwirkende Kraft erfassen kann.

Der Schaltkreis 852 des Wechselaufsatzes mit Beschichten-Werkzeug und/oder Inspizieren-Werkzeug können beispielsweise eine Arbeitsbereich-Anzeigeeinheit aufweisen, welche den Arbeitsbereich 812 anzeigt, z.B. indem dieser mittels einer Lichtquelle der Arbeitsbereich-Anzeigeeinheit angestrahlt wird. Die Größe des angezeigten Arbeitsbereichs kann optional verändert werden, wobei der tatsächlich eingestellte Arbeitsbereich bzw. Arbeitspunkt beim Trainieren zum Bilden des Steuerungsmodell 116m berücksichtigt werden kann.

Der Schaltkreis 852 des Wechselaufsatzes mit Beschichten-Werkzeug, Schraub-Werkzeug, Verlagerung-Werkzeug, und/oder mit Inspizieren-Werkzeug kann beispielsweise die Zusatzschnittstelle aufweisen.

Die Zusatzschnittstelle kann beispielsweise eine zusätzliche Eingabeeinheit aufweisen, die eingerichtet ist zum Eingeben eine Information über einen Arbeitspunkt des Werkzeugs (auch als Arbeitspunktinformationen bezeichnet). Die Arbeitspunktinformation kann beispielsweise einen Beginn, eine Dauer und/oder eine Stärke der Tätigkeit repräsentieren, z.B. einer Beschichtung (z.B. den dafür verwendeten Durchfluss). Die zusätzliche Eingabeeinheit kann beispielsweise einen oder mehr als einen Schalter, Schieberegler, Kraftsensor oder Ähnliches aufweisen. Die Zusatzschnittstelle kann alternativ oder zusätzlich eine zusätzliche Rückmeldeeinheit aufweisen, die eingerichtet ist, eine Rückmeldung auszugeben. Die zusätzliche Rückmeldeeinheit kann beispielsweise eine optische Rückmeldeeinheit (z.B. eine Lichtquelle aufweisend), z.B. eine haptische Rückmeldeeinheit (z.B. eine Vibrationsquelle aufweisend, z.B. einen Unwuchtmotor aufweisend), und/oder eine akustische Rückmeldeeinheit (z.B. einen Lautsprecher aufweisend) aufweisen. Die Rückmeldung kann beispielsweise einen Status des Arbeitspunktes angeben, dessen Änderung quittieren, das Erfassen einer Benutzereingabe quittieren, das (physische, elektrische und/oder kommunikative) Ankuppeln und/oder Abkuppeln des Wechselaufsatzes quittieren, das Erfassen einer mechanischen Einwirkung auf den Wechselaufsatz quittieren. Die optische Rückmeldeeinheit kann beispielsweise ein Display oder eine andere Anzeige aufweisen.

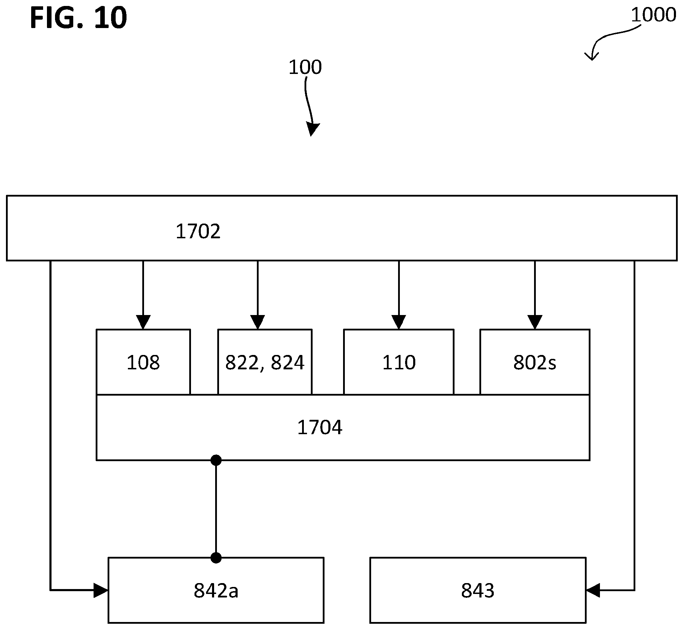

**Fig.10** veranschaulicht das Handgerät 100 gemäß verschiedenen Ausführungsformen in einem schematischen Aufbaudiagram 1000.

Das Handgerät 100 kann hierin ein mittels eines Steuerungsprograms programmierbares mobiles Gerät sein. Einmal programmiert, kann das Handgerät 100 eingerichtet sein, zumindest Teile einer mittels des Handgeräts 100 vorgeführten Prozesstätigkeit autonom zu erfassen und als Trainingsdaten mittels der Ausgabeeinheit 110 zu senden. Die Trainingsdaten können die Aktivierungsinformation und/oder die räumliche Information aufweisen oder daraus gebildet sein. Die räumliche Information kann beispielsweise ein Position, Bewegung und/oder Ausrichtung des Handgeräts 100 aufweisen.

Alternativ oder zusätzlich kann das Handgerät 100 eingerichtet sein, selbst erfasst zu werden, z.B. dessen Position, Bewegung und/oder Ausrichtung.

Das Handgerät 100 kann eine Steuervorrichtung 1702 aufweisen, welche eingerichtet ist, zumindest die Eingabeeinheit 108 auszulesen und/oder die Ausgabeeinheit 110 anzusteuern. Beispielsweise kann die Steuervorrichtung 1702 eingerichtet sein, die oder jede mittels der Eingabeeinheit 108 erfasste Aktivierungsinformation zu senden gemäß einem Kommunikationsprotokoll mittels der Ausgabeeinheit 110 (z.B. an die Datenverarbeitungsanlage und/oder ein Netzwerk). Beispiele für die Eingabeeinheit 108 können aufweisen: einen oder mehr als einen Schalter (z.B. Taster), z.B. einen berührungslosen Schalter, eine berührungsempfindliche Oberfläche (z.B. resistiv und/oder kapazitiv), einen virtuellen Schalter (z.B. mittels eines Display implementiert).

Die Ausgabeeinheit 110 kann beispielsweise eine drahtlos-Ausgabeeinheit 110 sein und optional auch einen Transceiver zum Empfangen von Daten aufweisen. Beispielsweise kann die Steuervorrichtung 1702 mittels des Transceivers der Ausgabeeinheit 110 Daten mit der Datenverarbeitungsanlage und/oder dem Netzwerk austauschen. Beispielsweise für die Ausgabeeinheit 110 können aufweisen: einen Bluetooth-Transceiver, einen WLAN-Transceiver, einen Mobilfunk-Transceiver.

Optional kann die Ausgabeeinheit 110 auch eingerichtet sein, das Handgerät 100 im System zu registrieren. Das Registrieren kann beispielsweise erfolgen, sobald das Handgerät 100 eingeschaltet wird. Somit kann das System erkennen, ob oder wann das Handgerät 100 bereitgemacht ist zum Trainieren mindestens einer Bewegung und mindestens einer Tätigkeit der Maschine. Ist die Eingabeeinheit eine Komponente einer Handgerät-externen Vorrichtung, kann die Handgerät-externe Vorrichtung in Analogie dazu eingerichtet sein, sich selbst im System zu registrieren oder die Registrierung des Handgeräts 100 zu verwalten (z.B. wenn die Handgerät-externe Vorrichtung eine Systemverwaltung implementiert).

Die Steuervorrichtung 1702 kann beispielsweise einen oder mehr als einen Prozessor und/oder ein Speichermedium aufweisen.

Die Steuervorrichtung 1702 kann beispielsweise eingerichtet sein, mittels eines oder mehr als eines Sensors 802s (sofern vorhanden) des Handgeräts 100 die räumliche Information zu erfassen. Beispielsweise für Sensoren des Handgeräts 100 können aufweisen: einen GPS-Sensor, einen Lagesensor (z.B. einen Ausrichtungssensor und/oder einen Positionssensor aufweisend), einen Beschleunigungssensor, einen Rotationssensor, einen Geschwindigkeitssensor, einen Luftdrucksensor, einen optoelektronischen Sensor, einen Radarsensor.

Die Steuervorrichtung 1702 kann beispielsweise eingerichtet sein, mittels einer Schnittstelle 843 (sofern vorhanden) des Handgeräts 100 Daten mit einem an das Handgerät 100 gekuppelten Wechselaufsatz 210 auszutauschen.

Beispielsweise kann auf der Steuervorrichtung 1702 eine Software ausgeführt werden, welche eine oder mehr als eine der vorstehenden Funktionen bereitstellt, eine Programmierschnittstelle aufweist und/oder zyklisch den Status der Komponenten des Handgeräts 100 ausliest.

Das Handgerät 100 kann eine Batterie 1704 (z.B. einen Akkumulator) aufweisen, welcher eingerichtet ist, die elektrischen Komponenten 108, 110, 822, 824, 802s des Handgeräts 100 mit elektrischer Energie zu versorgen. Optional kann das Handgerät 100 einen Ladeanschluss aufweisen, über welchen der Batterie 1704 von außen elektrische Energie zugeführt werden kann zum Aufladen der Batterie 1704.

Die Batterie 1704 kann beispielsweise eingerichtet sein, mittels einer Schnittstelle 842a (sofern vorhanden) des Handgeräts 100 Energie mit einem an das Handgerät 100 gekuppelten Wechselaufsatz 210 auszutauschen. Das Austauschen von Energie kann beispielsweise mittels der Steuervorrichtung 702 gesteuert werden.

Anhand einer mittels der Eingabeeinheit 108 erfassten Benutzereingabe (z.B. Kraft, Wiederholung, Geschwindigkeit, Ort, usw.) kann beispielsweise ermitteln werden, ob die Benutzereingabe ein Kriterium erfüllt. Ist das Kriterium gemäß dem Typ der Eingabeeinheit 108 parametrisiert (d.h. auf eine von der Eingabeeinheit 108 erfassbare Eigenschaft abgebildet), kann die von der Eingabeeinheit 108 erfasste Eigenschaft mit dem parametrisierten Kriterium verglichen werden, um zu ermitteln, ob das Kriterium erfüllt ist. Erfüllt die Benutzereingabe ein erstes Kriterium, kann die erste Aktivierungsinformation erfasst werden. Erfüllt die Benutzereingabe ein zweites Kriterium, kann die zweite Aktivierungsinformation erfasst werden. Die mittels der Eingabeeinheit 108 bereitgestellten Funktionen können aber auch ganz oder teilweise mittels der anderen Handgerät-externen Vorrichtung bereitgestellt werden, z.B. mittels eines Funkschalters und/oder mittels einer mobilen Rechenvorrichtung (z.B. eines Tablets), auf welcher beispielsweise eine Anwendung ausgeführt wird, welche die Funktionen der Eingabeeinheit 108 emuliert.

Das Handgerät 100 kann optional eine oder mehr als eine Rückmeldeeinheit 822, 824 aufweisen. Die Steuervorrichtung 1702 des Handgeräts 100 kann beispielsweise eingerichtet sein, mittels der einen oder mehr als einen Rückmeldeeinheit 822, 824 eine (z.B. haptische und/oder optische) Rückmeldung auszugeben. Die Rückmeldung kann beispielsweise einen Status des Trainierens repräsentieren, dessen Änderung (z.B. Aktivieren bzw. Deaktivieren) quittieren, das Erfassen einer Benutzereingabe quittieren, das (physische, elektrische und/oder kommunikative) Ankuppeln und/oder Abkuppeln eines Wechselaufsatzes quittieren, einen Status des Handgeräts 100 (z.B. dessen Batterieladung) repräsentieren, und/oder das Erfassen einer mechanischen Einwirkung auf den Wechselaufsatz quittieren. Beispiele für die Rückmeldeeinheit 822, 824 weisen auf: eine Lichtquelle (z.B. eine Leuchtdiode), eine Schallquelle (z.B. einen Lautsprecher), eine Vibrationsquelle (z.B. einen Unwuchtmotor).

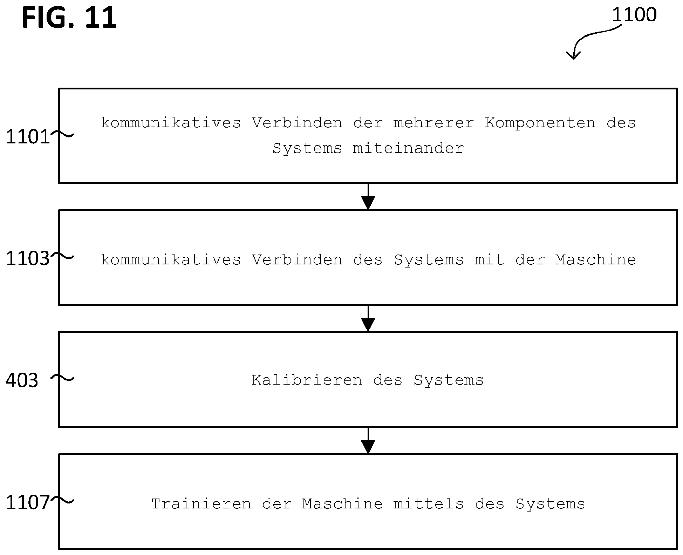

**Fig.11** veranschaulicht das Verfahren 300 gemäß verschiedenen Ausführungsformen in einem schematischen Ablaufdiagramm 1100. Das Verfahren 300 kann aufweisen: in 1101, erstes kommunikatives Verbinden der mehrerer Komponenten des Systems miteinander; und in 1103, zweites kommunikatives Verbinden des Systems mit der Maschine. Das erste Verbinden kann beispielsweise drahtlos erfolgen. Das zweite Verbinden kann beispielsweise mittels eines Kabels erfolgen, z.B. eines Netzwerkkabels, das die Maschine mit der Datenverarbeitungsanlage verbindet. Optional kann die Datenverarbeitungsanlage mittels des Netzwerkkabels von der Maschine mit Energie versorgt werden.

Das Verfahren 300 kann optional aufweisen: Kalibrieren 1103 des Systems. Mittels der Ortungsvorrichtung 112 (z.B. deren Ortungssignal) kann eine Lage und/oder Bewegung des Handgeräts erfasst werden (beispielsweise dessen exakte Position im Raum ermittelt werden). Dafür kann das Handgerät mithilfe der Befestigungsvorrichtung an der Maschine befestigt werden. Je nach Typ der Maschine können beispielsweise verschiedene Typen der Befestigungsvorrichtungen verwendet werden. Das Erfassen des Handgeräts kann beispielsweise mittels Infrarotlichts (zum Beispiel eines Lichtmusters) erfolgen, welches von der Ortungsvorrichtung 112 emittiert wird. Das Kalibrieren 1103 kann beispielsweise vollautomatisch erfolgen, beispielsweise wenn eine Eingabe ein vorgegebenes Kriterium erfüllt.

Das Verfahren 300 kann in 1101 aufweisen: Trainieren der Maschine mittels des Systems. Die Person kann einen passenden Wechselaufsatz an das Handgerät kuppeln und die Tätigkeit mittels des so gebildeten Trainiergeräts ausführen. Optional kann die Person eine Anwendung mittels der Datenverarbeitungsanlage ausführen, mittels welcher verschiedene Einstellungen und/oder Informationen zu der auszuführenden Tätigkeit eingestellt werden können. Das Trainieren kann ferner aufweisen, dass die Trainingsdaten aufgezeichnet werden. Die Trainingsdaten können beispielsweise räumliche Informationen mit einer Genauigkeit von Millimetern (oder Zehntel Millimetern) aufweisen. Die Trainingsdaten können optional eine erfasste mechanische Wechselwirkung (z.B. eine Kraft) mit dem Wechselaufsatz beim Ausführen der Tätigkeit ausweisen. Beispielsweise kann mittels eines Kraftsensors des Handgeräts ein auf den Wechselaufsatz einwirkender Druck der Tätigkeit erfasst werden. Die Druckstärke kann beispielsweise beim Trainieren eines Schleifprozesses als Parameter der Tätigkeit berücksichtigt werden. Das Trainieren kann ferner aufweisen, dass auf Grundlage der Trainingsdaten das Steuermodell gebildet wird. Das Steuermodell kann mehrere Steuerinformationen aufweisen, die zeitlich nacheinander ausgeführt werden. Eine Steuerinformation kann beispielsweise repräsentieren, in welchen Arbeitspunkt die Maschine gebracht werden soll.

Das Trainieren kann optional aufweisen, die Trainingsdaten, das Steuermodell, und/oder das Prozessmodell nachzubearbeiten. Das Nacharbeiten kann beispielsweise von einem Benutzer durchgeführt werden, der mit der Datenverarbeitungsanlage interagiert. Alternativ oder zusätzlich kann das Nacharbeiten mittels einer künstlichen Intelligenz erfolgen. Dies erleichtert es komplexere Prozesse zu trainieren.

Das Trainieren kann ferner aufweisen, den Programmcode zu generieren. Dazu kann beispielsweise der Programmcode in einer Programmiersprache der Maschine generiert werden. In welcher Programmiersprache der Programmcode verfasst wird kann beispielsweise von der Datenverarbeitungsanlage ermittelt werden, indem diese beispielsweise den Typ der Maschine ermittelt.

Die mehrerer Komponenten des Systems können das Handgerät, die Datenverarbeitungsanlage, die Ortungsvorrichtung 112 und/oder (z.B. sofern kommunikationsfähig) den Wechselaufsatz 210 aufweisen.

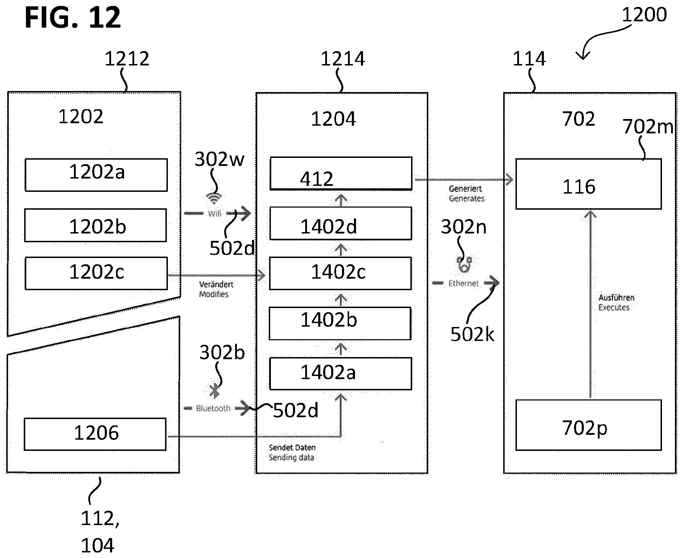

**Fig.12** veranschaulicht ein System 1200, z.B. eingerichtet wie eines der Systeme 200, 200, 700, 800 oder 900, in einem Verfahren 300 gemäß verschiedenen Ausführungsformen in einen schematischen Kommunikationsdiagram 1200.

Die Datenverarbeitungsanlage 502 kann optional ein mobiles Terminal 1212 (z.B. ein Mobilfunkgerät, z.B. ein Tablet) aufweisen, auf welchem ein Benutzungsschnittstelle 1202 (auch als Front-End bezeichnet) der Anwendung ausgeführt wird. Die Datenverarbeitungsanlage 502 kann alternativ oder zusätzlich ein stationäres Terminal 1214 (z.B. eine Datenverarbeitungsanlage, z.B. einen Server) aufweisen, auf welchem ein Unterbau 1204 (auch als Back-End bezeichnet) der Anwendung (z.B. als Verarbeitungskomponente) ausgeführt wird.

Das stationäre Terminal 1214 kann beispielsweise verkabelt 502k sein mit der Maschine 114, z.B. mittels eines Netzwerks 302n. Das stationäre Terminal 1214 kann beispielsweise drahtlos 502d (z.B. mittels WLAN 302w) und/oder drahtgebunden (z.B. mittels eines langen Kabels des Terminals 1214) mit dem mobilen Terminal 1212 verbunden sein. Das stationäre Terminal 1214 kann beispielsweise drahtlos (z.B. mittels Bluetooth 302b) mit einer Verarbeitungssoftware 1206 verbunden sein, welche beispielsweise auf dem Handgerät 100 und/oder der Ortungsvorrichtung 112 ausgeführt wird. Die Verarbeitungssoftware 1206 kann eingerichtet sein, die Trainingsdaten (oder eine bereits vorverarbeitete Version dessen) an das Back-End 1204 zu übermitteln. Eine oder mehr als eine (z.B. jede) der drahtlosen Verbindungen 302w, 302b, 302n kann alternativ oder zusätzlich mittels einer drahtgebunden Verbindung bereitgestellt sein oder werden und andersherum.

Alternativ oder zusätzlich zu dem Terminal 1214 kann auch eine nicht-lokale Logik (z.B. eine Cloud) verwendet werden, um die Verarbeitungskomponente bereitzustellen. Beispielsweise kann ein zentraler Server eingerichtet sein, jedem System einer Vielzahl von Systemen eine Verarbeitungskomponente bereitzustellen. Dies spart Ressourcen. Beispielsweise kann in diesem Fall die Übertragung der Trainingsdaten und/oder der Steuerinformationen an die bzw. von der Verarbeitungskomponente über das Internet oder netzwerkinterne Ressourcen (z.B. EdgeClouds) erfolgen.

Das Front-End 1202 (z.B. dessen Benutzeroberfläche) kann eine Konfigurations- und Kalibrierungsverwaltung 1202a, eine Trainingsdatenvisualisierung 1202b und einen Prozesstätigkeit-Planer 1202c aufweisen.

Das Back-End 1204 kann eine Verarbeitungskomponente 1402a aufweisen, welche die Trainingsdaten sammelt und/oder die Ortung vornimmt, z.B. auf Grundlage der Trainingsdaten die Trainiertrajektorie 111 und/oder die zugehörigen Arbeitspunkte entlang der Trainiertrajektorie 111 ermittelt. Das Back-End 1204 kann eine Prozessmodel-Erzeugungskomponente 1402b aufweisen, welche auf Grundlage der Trainiertrajektorie 111 und/oder der zugehörigen Arbeitspunkte entlang der Trainiertrajektorie 111 das Prozessmodel 104m ermittelt. Das Back-End 1204 kann eine optionale Prozessmodel-Justierungskomponente 1402c aufweisen, welche auf Grundlage von Instruktionen, die von dem Prozesstätigkeit-Planer 1202c stammen, das ermittelte Prozessmodel 104m verändert. Das Back-End 1204 kann eine Steuerungsmodell-Erzeugungskomponente 1402d aufweisen, welche auf Grundlage des Prozessmodels 104m das Steuerungsmodell 116m ermittelt.

Das Back-End 1204 kann den Codegenerator 412 aufweisen, welcher auf Grundlage des Steuerungsmodells 116m den Programmcode 116 generiert und auf einem Speichermedium 702m (z.B. Datenspeicher) der Maschine 114 abspeichert. Ein Prozessor 702p der Steuerungsvorrichtung 702 kann das Speichermedium 702m auslesen, um den Programmcode 116 auszuführen. Wie oben schon beschrieben, kann der Codegenerator 412 weggelassen werden, z.B. wenn die Steuerbefehle direkt an die Maschine übertragen werden ohne den Programmcode zu generieren.

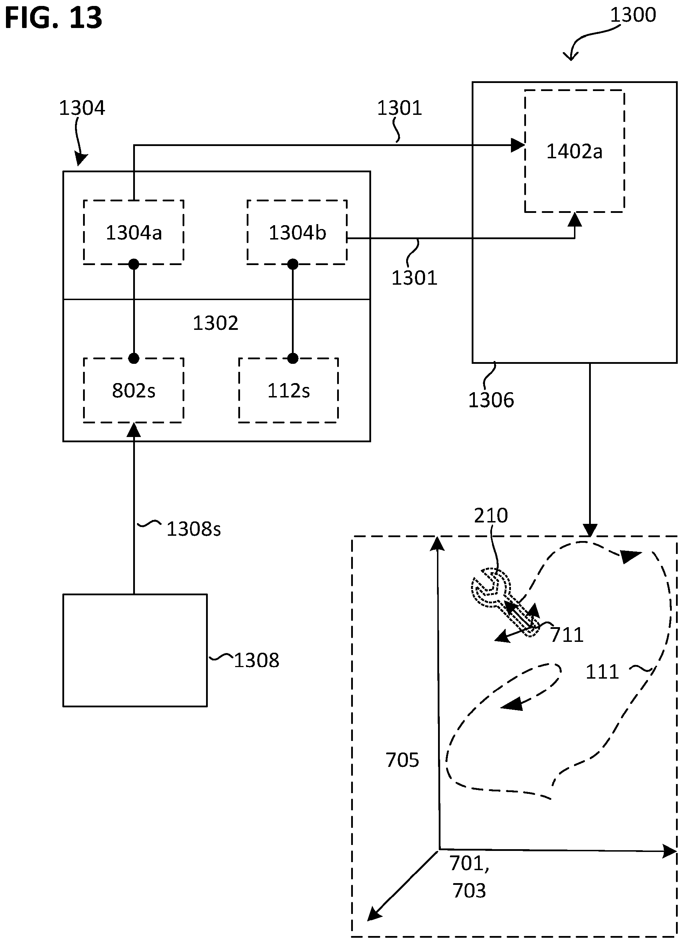

**Fig.13** veranschaulicht einen Trajektorie-Ermittlungsmechanismus 1300 des Systems 200 in einen schematischen Kommunikationsdiagram.

Der Trajektorie-Ermittlungsmechanismus 1300 kann eingerichtet sein, die Trainiertrajektorie 111 zu ermitteln, z.B. zumindest teilweise auf Grundlage der räumlichen Information 1301 über das Handgerät 100. Der Trajektorie-Ermittlungsmechanismus 1300 kann zumindest eine Messkettenkomponente 1304 und eine Auswertungskomponente 1306 aufweisen. Die Messkettenkomponente 1304 kann eine Sensoranordnung 1302 und einen oder mehr als einen Messwertgeber 1304a, 1304b aufweisen.

Die Sensoranordnung 1302 (z.B. jeder ihrer Sensoren) kann eingerichtet sein, eine oder mehr als eine Messgröße zu erfassen, welche die räumliche Information über das Handgerät 100 repräsentiert (z.B. aus der sich die räumliche Information herleiten lässt). Die Sensoren der Sensoranordnung 1302 können beispielsweise interne oder auch externe Sensoren aufweisen, die (beispielsweise mittels einer Kommunikationsverbindung) in dem System registriert sind.

Als Sensor (auch als Detektor bezeichnet), kann ein Wandler verstanden werden, der eingerichtet ist, eine zu dem Sensortyp korrespondierende Eigenschaft seiner Umgebung qualitativ oder als Messgröße quantitativ zu erfassen, z.B. eine physikalische oder chemische Eigenschaft und/oder eine stoffliche Beschaffenheit. Die Messgröße ist diejenige physikalische Größe, der die Messung mittels des Sensors gilt.

Der oder jeder Messwertgeber 1304a, 1304b kann mit zumindest einem Sensor der Sensoranordnung 1302 gekoppelt sein und eingerichtet sein, einen Messwert als Abbild der erfassten Messgröße des zumindest einen Sensors bereitzustellen. Die bereitgestellten Messwerte (anschaulich Messdaten) können als Teil der Trainingsdaten der Auswertungskomponente 1306 zugeführt werden. Die Messdaten können konkrete Werte zu der räumlichen Information aufweisen, z.B. über eine Bewegung (z.B. Rotation und/oder Translation) im Raum, eine Position im Raum, und/oder eine Ausrichtung im Raum.

Es können beispielsweise verschiede physikalische Größen erfasst werden, z.B. eine Kraft, welche von der Bewegung bewirkt wird, oder die Veränderung eines optischen Signals, welche von der Bewegung bewirkt wird. Es kann beispielsweise eine Kamera verwendet werden, die einen Strom aus Bilddaten des Raums erfasst, in dem das Handgerät angeordnet ist, wobei anhand der Bilddaten die räumliche Information über das Handgerät ermittelt werden kann. Es kann aber auch beispielsweise ein Abstand zwischen einem Referenzpunkt der Ortungsvorrichtung 112 (z.B. deren Ortungseinheit 112a) und dem Handgerät gemessen werden, z.B. mittels Radar, Lidar oder Sonar. Es kann aber auch beispielsweise eine Ausrichtung des Handgeräts mittels eines Neigungssensors des Handgeräts erfasst werden. Es kann aber auch beispielsweise ein Photosensor des Handgeräts verwendet werden, um eine Bewegung relativ zu einem optischen Ortungssignal (z.B. einem optischen Muster) zu erfassen. Ein Inertialsensor des Handgeräts kann beispielsweise den aktuellen Bewegungszustand des Handgeräts erfassen.

Gemäß verschiedenen Ausführungsformen können die Komponenten des Trajektorie-Ermittlungsmechanismus 1300 (z.B. Sensoren bzw. Messwertgeber), auf verschiedene Komponenten des Systems verteilt sein. Beispielsweise kann das Trainingsgerät 302 (z.B. das Handgerät 100) einen oder mehr als einen Sensor 802s (auch als Handgerät-interner Trajektoriesensor bezeichnet) der Sensoranordnung 1302 und/oder einen oder mehr als einen Messwertgeber 1304a aufweisen. Alternativ oder zusätzlich kann die Handgerät-externe Vorrichtung (z.B. deren Ortungsvorrichtung 112) einen oder mehr als einen Sensor 112s der Sensoranordnung 1302 (auch als Handgerät-externer Trajektoriesensor bezeichnet) und/oder einen oder mehr als einen Messwertgeber 1304a aufweisen. Die Auswertungskomponente 1306 kann beispielsweise Teil der Datenverarbeitungsanlage 502 sein, z.B. als Komponente der Anwendung (z.B. als Verarbeitungskomponente 1402a) von der Datenverarbeitungsanlage 502 ausgeführt werden, oder der Datenverarbeitungsanlage 502 die ermittelte Trainingstrajektorie 111 übermitteln.

Die Auswertungskomponente 1306 kann eingerichtet sein, auf Grundlage die zugeführten Messdaten 1301 die Trainiertrajektorie 111 zu ermitteln. Dazu kann die Auswertungskomponente 1306 eingerichtet sein, die Messdaten in Zusammenhang zueinander zu bringen, diese zu interpretieren, deren Ursprung zu berücksichtigen, deren Verknüpfung mit der räumlichen Information über das Handgerät zu berücksichtigen, usw. Beispielsweise können Ergebnisse aus Messwerten unterschiedlicher Sensoren einander überlagert werden und so eine genauere Trainingstrajektorie 111 ergeben. Unter Kenntnis der Verknüpfung der Messgröße mit der räumlichen Information kann der Messwert auf einen Wert der räumlichen Information abgebildet werden, z.B. auf eine Ortskoordinate und/oder deren zeitliche Veränderung. Je mehr Sensoren verwendet werden, desto genauer kann die Trajektorie 111 sein.

Optional kann der Trajektorie-Ermittlungsmechanismus 1300 eine oder mehr als eine Handgerät-externe Ortungssignalquelle 1308 aufweisen. Die oder jede Ortungssignalquelle 1308 kann eingerichtet ein Ortungssignal 1308s zu emittieren, z.B. zu dem Handgerät hin und/oder zumindest in den Raum hinein, in dem das Handgerät angeordnet ist. Mehrere Ortungssignale 1308s können beispielsweise einander überlagert werden (vgl. beispielsweise Fig. 7).

Das Ortungssignal 1308s kann beispielsweise ein Infrarotsignal (Licht im Infrarotbereich aufweisend), ein Ultraschall-Signal, ein Radiosignal und/oder ein sichtbares Lichtsignal (Licht im sichtbaren Bereich aufweisend) aufweisen. Das Ultraschall-Signal kann beispielsweise eine hohe Genauigkeit ermöglichen (beispielsweise bei einer Laufzeitmessung). Das Infrarot-Signal ermöglicht eine preisgünstige Umsetzung. Ferner ist beim Infrarot-Signal keine direkte Verbindung zwischen Sender und Empfänger nötig, da das Infrarot-Signal durch Reflexionen zum Empfänger gelangen kann. Somit kann zumindest ermittelt werden, ob in einem Raum ein Infrarot-Signal vorhanden ist. Auf ein elektromagnetisches Ortungssignal (z.B. Lichtsignal, Radiosignal, Infrarotsignal) kann optional eine Senderidentifikation aufmoduliert sein, wodurch verschiedene Ortungssignalquellen 1303 anhand ihres Ortungssignals unterschieden werden können. Im Gegensatz zum Infrarotsignal und sichtbarem Lichtsignal kann ein Radiosignal Wände und andere Hindernisse durchdringen, wodurch ein Empfang erleichtert wird. Das Lichtsignal kann selbst mit einem technisch wenig komplexen ladungsgekoppelten Sensor erfasst werden. Die oder jede Ortungssignalquelle 1308 kann beispielsweise einen Laserscanner aufweisen.

Mittels eines oder mehr als eines Ortungssignals 1308s kann die räumliche Information ermittelt werden, z.B. basierend auf einem oder mehr als einem der folgenden Messungsmechanismen: Reichweite-Mechanismus, Laufzeit-Mechanismus, Laufzeitdifferenz-Mechanismus, Einfallswinkel-Mechanismus, und/oder Signalstärke-Mechanismus. Die oder jede Ortungssignalquelle 1308 kann unter Kenntnis ihrer Position im Raum als Referenzpunkt für den Messungsmechanismus dienen. Beispielsweise kann eine geometrische Relation (z.B. Abstand, Winkel, usw.) bezüglich des Referenzpunkts ermittelt werden und darauf basierend die räumliche Information über das Handgerät. Anhand eines Abstands zu einer oder mehr als einer Ortungssignalquelle kann dann eine Position des Handgeräts ermittelt werden. Optional kann anhand des jeweiligen Abstands zweier Sensoren des Handgeräts auch dessen Ausrichtung bezüglich einer Ortungssignalquelle ermittelt werden.

Beim Reichweite-Mechanismus kann jede Ortungssignalquelle 1308 eine Zelle in der Größe der Reichweite des Ortungssignals 1308s bereitstellen. Die erfasste Zelle kann beispielsweise über die Senderidentifikation einer Ortungssignalquelle und deren Position zugeordnet werden, wobei die Größe der Zelle den Abstand des Sensors 802 von der Ortungssignalquelle 1308 nach oben begrenzt. Beim Laufzeit-Mechanismus kann die Zeitdifferenz zwischen dem Senden und Empfangen des Ortungssignals 1308s (auch als Laufzeit bezeichnet) gemessen werden. Die Zeitdifferenz kann beispielsweise über die Senderidentifikation einer Ortungssignalquelle und deren Position zugeordnet und in einen Abstand zu dieser umgerechnet werden. Beim Laufzeitdifferenz-Mechanismus kann die Laufzeit zweier Ortungssignale miteinander verglichen werden und darauf basierend der Abstand zu den entsprechenden Ortungssignalquellen ermittelt werden. Beim Einfallswinkel-Mechanismus kann der Einfallswinkel des Ortungssignals 1308s ermittelt werden, der beispielsweise in eine Ausrichtung umgerechnet werden kann. Auf Grundlage mehrerer Einfallswinkel kann beispielsweise auch eine Position ermittelt werden. Beim Signalstärke-Mechanismus kann die Signalstärke des Ortungssignals in einen Abstand zur Ortungssignalquelle umgerechnet werden.

Es kann alternativ oder zusätzlich eine visuelle Erfassung des Handgeräts und/oder dessen Umgebung mittels der Kamera erfolgen und darauf basierend die räumliche Information ermittelt werden. Es kann auch eine Überlagerung der Daten verschiedener Sensoren (z.B. Bilddaten und Lagedaten oder Bilddaten und Beschleunigungsdaten) erfolgen, um die Genauigkeit zu verbessern.

Die oder jede Ortungssignalquelle 1308 kann beispielsweise als Teil einer Ortungseinheit 112a, 112b bereitgestellt sein. Die oder jede Ortungseinheit 112a, 112b kann alternativ oder zusätzlich auch zumindest einen Trajektoriesensor 112s der Handgerät-externen Vorrichtung (auch als Handgerät-externer Trajektoriesensor 112s bezeichnet) aufweisen.

Im Ergebnis werden mittels der Trajektoriesensoren 802s, 112s des Trainiergeräts 302 und/oder der Ortungsvorrichtung 112 zeitbasierte Trainingsdaten, beispielsweise in hoher Frequenz, erfasst und aufgezeichnet, die die komplette Prozesstätigkeit beschreiben.

Beispiele für einen Handgerät-externen Trajektoriesensor 112s weisen auf: eine Kamera 112, einen Abstandssensor 112, einen Sonarsensors 112 und/oder einen Radarsensor 112. Beispiele für einen Handgerät-internen Trajektoriesensor 802s weisen auf: eine Kamera 112, einen Bewegungssensor (z.B. einen Rotationssensor, einen Geschwindigkeitssensor und/oder einen Beschleunigungssensor), einen Inertialsensor, einen Lagesensor (z.B. einen Ausrichtungssensor und/oder einen Positionssensor), einen Infrarotsensor, und/oder einen Luftdrucksensor. Der Positionssensor kann beispielsweise auch einen GPS-Sensor aufweisen. Der Ausrichtungssensor kann beispielsweise einen Gyrosensor, einen Schwerkraftsensor und/oder einen Magnetfeldsensor (z.B. zum Ermitteln der Ausrichtung im Erdmagnetfeld) aufweisen. Der Luftdrucksensor kann beispielsweise ermöglichen, eine Information zu einer vertikalen Position des Handgeräts 100 zu ermitteln, was es ermöglicht, eine genauere Triangulation durchzuführen.

Das Ermitteln der Trainingstrajektorie 111 kann beispielsweise erfolgen: mittels Lasertrackings (z.B. im Infrarotbereich und/oder mittels eines Infrarotlasers), mittels optischen Trackings (z.B. mittels einer Kamera und/oder Mustererkennung), mittels Radars (z.B. mittels eines Radar-Transceivers), mittels Ultraschalls (z.B. mittels eines Ultraschall-Transceivers), mittels eines globalen Positionsbestimmungssystems (GPS), mittels einer inertialen Messeinheit (IMU) des Handgeräts. Eine IMU des Handgeräts kann beispielsweise mehrere verschiedene Inertialsensoren aufweisen, wie beispielsweise einen oder mehr als einen Beschleunigungssensor und/oder einen oder mehr als einen Drehratensensor.

Die Trainingstrajektorie 111 kann beispielsweise eine räumliche Verteilung des Arbeitsortes repräsentieren. Der Arbeitsort kann denjenigen Ort im Raum 701, 703, 705 bezeichnen, an welchem eine Wirkung des Prozesswerkzeugs erfolgen soll. Beispielsweise kann der Arbeitsort ortsfest bezüglich des Trainiergeräts 302 (z.B. des Koordinatensystems 711) sein. Beispielsweise kann der Arbeitsort an der Spitze des Trainierwerkzeugs 210 angeordnet sein und/oder dessen Position zumindest jeweils von dem Trainierwerkzeug 210 des Trainingsgeräts 302 abhängig sein oder werden.

Das System kann beispielsweise ein Model des Trainiergeräts 302 aufweisen, welches das an dem Handgerät 100 angekuppelte Trainierwerkzeug 214 (z.B. dessen Typ) repräsentiert, wobei das Model des Trainiergeräts 302 beim Ermitteln der Trainingstrajektorie 111 berücksichtigt werden kann. Das Model des Trainiergeräts 302 kann beispielsweise eine Position des Arbeitspunkts in dem Koordinatensystem 711 des Trainiergeräts 302 angeben. Alternativ oder zusätzlich kann das Model des Trainiergeräts 302 beispielsweise eine Lage der Längsrichtung 711a des Handgeräts in dem Koordinatensystem 711 des Trainiergeräts 302 festlegen.

In einer Ausführungsform weist das System mehrere separate Ortungseinheiten 112a, 112b auf, von denen jede Ortungseinheit eingerichtet ist, ein gepulstes Infrarotsignal als Ortungssignal zu emittieren. Das oder jedes gepulste Infrarotsignal wird von mehreren separaten optoelektronischen Sensoren des Sensorabschnitts erfasst. Die auf dem erfassen Infrarotsignal ermittelten Messdaten werden zusammen mit Daten, die eine oder mehr als eine Eingabe an dem Trainingsgerät (z.B. der Eingabeeinheit des Handgeräts und/oder des Wechselaufsatzes) repräsentieren, als Trainingsdaten an das stationäre Terminal übermittelt. Das stationäre Terminal ermittelt auf Grundlage der Daten und unter Berücksichtigung des Wechselaufsatzes des Trainingsgeräts, die Trainingstrajektorie und optional für jeden Punkt der Trainingstrajektorie einen Arbeitspunkt. Der Arbeitspunkt wird beispielsweise auf Grundlage der Handhabung der Funktion des Wechselaufsatzes ermittelt. Das Aufzeichnen der Messdaten wird beispielsweise gestartet in Antwort auf das Betätigen der Eingabeeinheit des Handgeräts.

In einer Ausführungsform kann von dem Handgerät ermittelt werden, welchen Wechselaufsatz das Trainingsgerät aufweist (auch als Wechselaufsatz-Identifikation bezeichnet), d.h. der Typ des Wechselaufsatzes ermittelt werden. Die Wechselaufsatz-Identifikation erfolgt beispielsweise mittels RFID, z.B. indem ein Funketikett des Wechselaufsatzes ausgelesen wird. Das Funketikett kann beispielsweise einen abgespeicherten Wechselaufsatz-Identifikator aufweisen und/oder übermitteln, z.B. eine Nummer. Die Wechselaufsatz-Identifikation erfolgt alternativ oder zusätzlich mittels Erfassens eines resistiven Widerstands der Energieversorgungsverbindung, in welchem sich die mehreren Wechselaufsätze voneinander unterscheiden. Die Wechselaufsatz-Identifikation erfolgt alternativ oder zusätzlich mittels Erfassens der Funktion des Schaltkreises des Wechselaufsatzes. Welchen Wechselaufsatz das Trainingsgerät aufweist, kann auch mittels einer Benutzereingabe an der Rechenanlage angegeben werden. Das Ergebnis der Wechselaufsatz-Identifikation kann beim Ermitteln des Steuermodells (z.B. der Trainingstrajektorie) berücksichtigt werden.

## Patentansprüche

1. Handgerät (100) zum Trainieren mindestens einer Bewegung und mindestens einer Tätigkeit einer Maschine (114), das Handgerät (100) aufweisend:
• einen Griff (104);
• eine Eingabeeinheit (108), eingerichtet zum Eingeben von Aktivierungsinformation für das Aktivieren des Trainierens der Maschine (114);
• eine Ausgabeeinheit (110), eingerichtet zum Ausgeben der Aktivierungsinformation für das Aktivieren des Trainierens der Maschine (114) an eine Handgerät-externe Vorrichtung;
• eine Kupplungsstruktur (102) zum lösbaren Kuppeln eines Wechselaufsatzes (210), der eingerichtet ist gemäß der mindestens einen Tätigkeit; und **dadurch gekennzeichnet, dass** das Handgerät umfasst:
• einen oder mehr als einen Infrarotsensor (802s), welcher eingerichtet ist, ein Handgerät-externes Ortungssignal zu erfassen.

2. Handgerät (100) gemäß Anspruch 1, wobei die Ausgabeeinheit (110) eine drahtlos-Kommunikationsvorrichtung zum Kommunizieren mit der Handgerät-externen Vorrichtung aufweist; und/oder wobei die Eingabeeinheit (108) eingerichtet ist, eine Handhabung des Handgeräts (100) beim Durchführen der Tätigkeit zu erfassen.

3. Handgerät (100) gemäß Anspruch 1 oder 2, wobei die Tätigkeit eine Summe an Vorgängen betrifft, und wobei Informationen über die Tätigkeit, welche mittels des Handgeräts bereitgestellt und/oder aufgezeichnet werden aufweisen:
• ein Typ der Tätigkeit,
• eine räumliche Information, welche die räumliche Abfolge der Vorgänge beschreibt, und
• eine zeitliche Information, welche der räumlichen Information zugeordnet ist, und welche eine Dauer eines der Vorgänge beschreibt.

4. Handgerät (100) gemäß einem der Ansprüche 1 bis 3, ferner aufweisend:
eine Rückmeldeeinheit (822, 824), welche eingerichtet ist, eine Rückmeldung an einen Benutzer des Handgeräts (100) auszugeben.

5. Handgerät (100) gemäß einem der Ansprüche 1 bis 4, ferner aufweisend:
einen mechanischen Sensor, der eingerichtet ist, eine mechanische Einwirkung auf die Kupplungsstruktur oder
den Wechselaufsatz zu erfassen, wobei die Ausgabeeinheit eingerichtet ist zum Ausgeben einer Einwirkungsinformation über die erfasste mechanische Einwirkung an die Handgerät-externe Vorrichtung.

6. Handgerät (100) gemäß einem der Ansprüche 1 bis 5, ferner aufweisend:
einen oder mehr als einen zusätzlichen ersten Sensor (802s), welcher eingerichtet ist, eine räumliche Information zu erfassen über:
• eine Bewegung des Handgeräts (100) im Raum,
• eine Position des Handgeräts (100) im Raum, und/oder
• eine Ausrichtung des Handgeräts (100) im Raum.
wobei vorzugsweise der eine oder mehr als eine zusätzlich erste Sensor (802s) einen Bewegungssensor und/oder einen Lagesensor aufweist.

7. Handgerät (100) gemäß einem der Ansprüche 1 bis 6, wobei die Kupplungsstruktur (102) eingerichtet ist, den Wechselaufsatz (210) formschlüssig anzukuppeln; und/oder wobei die Kupplungsstruktur (102) stirnseitig des Handgeräts (100) angeordnet ist.

8. System (200, 700, 800, 1200), aufweisend:
• ein Handgerät (100) gemäß einem der Ansprüche 1 bis 7, welches ferner eine Schnittstelle (842a, 843) aufweist, die eingerichtet ist, zusammen mit einem Schaltkreis (852) des Wechselaufsatzes (210) eine Funktion zu implementieren und;
• die Handgerät-externe Vorrichtung und/oder den Wechselaufsatz (210), wobei der Wechselaufsatz (210) den Schaltkreis (852) aufweist, welcher eingerichtet ist, die Funktion bereitzustellen;
wobei vorzugsweise der Wechselaufsatz (210) einen Endabschnitt in Form eines Werkzeugs (214) aufweist, welches die Tätigkeit der Maschine (114) repräsentiert.

9. System (200, 700, 800, 1200) gemäß Anspruch 8, ferner aufweisend:
zumindest einen zusätzlichen Wechselaufsatz (210a bis 210g), wobei der zusätzlichen Wechselaufsatz gemäß einer anderen Tätigkeit eingerichtet ist, welche sich von Tätigkeit unterscheidet, und
wobei der zusätzliche Wechselaufsatz (210a bis 210g) und der Wechselaufsatz (210) derart zueinander eingerichtet sind, dass diese gegeneinander ausgetauscht werden können.

10. System (200, 700, 800, 1200) gemäß einem der Ansprüche 8 oder 9, wobei die Handgerät-externe Vorrichtung eine Datenverarbeitungsanlage (502) aufweist, welche eingerichtet ist, Steuerinformationen für die Maschine (114) zu ermitteln basierend auf der Aktivierungsinformation und auf der Tätigkeit,
wobei vorzugsweise die Datenverarbeitungsanlage (502) eine Kommunikationsschnittstelle aufweist, die gemäß einem Kommunikationsprotokoll der Maschine (114) eingerichtet ist; und wobei die Datenverarbeitungsanlage eingerichtet ist, mittels der Kommunikationsschnittstelle mit der Maschine zu kommunizieren,
wobei weiter vorzugsweise die Datenverarbeitungsanlage (502) eingerichtet ist, mittels der Kommunikationsschnittstelle die Steuerinformationen an die Maschine (114) zu übertragen.

11. System (200, 700, 800, 1200) gemäß Anspruch 10, ferner aufweisend:
eine Befestigungsvorrichtung, welche eingerichtet ist, das Handgerät an der Maschine zu befestigen,
wobei die Datenverarbeitungsanlage (502) ferner eingerichtet ist, eine Kalibrierungssequenz durchzuführen, indem die Maschine (114) mittels der Kommunikationsschnittstelle angesteuert wird, wenn das Handgerät mittels der Befestigungsvorrichtung an der Maschine befestigt ist.

12. Verfahren, aufweisend:
• Erfassen einer räumlichen Information des Handgeräts (100) gemäß einem der Ansprüche 1 bis 12, wenn die Aktivierungsinformation eingegeben wurde;
• Ermitteln von Steuerinformationen für die Maschine (114) basierend auf der räumlichen Information und der Tätigkeit.

13. Nichtflüchtiges Speichermedium, aufweisend Codesegmente, die eingerichtet sind, wenn von einem Prozessor ausgeführt, das Verfahren gemäß Anspruch 12 durchzuführen.

14. Handgerät (100) zum Trainieren mindestens einer Bewegung und mindestens einer Tätigkeit einer Maschine (114), das Handgerät (100) aufweisend:
• einen Griff (104);
• eine Eingabeeinheit (108), eingerichtet zum Eingeben von Aktivierungsinformation für das Aktivieren des Trainierens der Maschine (114);
• eine Ausgabeeinheit (110), eingerichtet zum Ausgeben der Aktivierungsinformation für das Aktivieren des Trainierens der Maschine (114) an eine Handgerät-externe Vorrichtung;
• ein Werkzeug, das eingerichtet ist gemäß der mindestens einen Tätigkeit; und **dadurch gekennzeichnet, dass** das Handgerät umfasst:
• einen oder mehr als einen ersten Infrarotsensor (802s), welcher eingerichtet ist, ein, vorzugsweis elektromagnetisches, Handgerät-externes Ortungssignal zu erfassen.

15. System (200, 700, 800, 1200) zum Trainieren mindestens einer Bewegung und mindestens einer Tätigkeit einer Maschine, aufweisend:
ein Handgerät (100) (114), aufweisend:
• einen Griff (104);
• ein Werkzeug oder eine Kupplungsstruktur (102) zum lösbaren Kuppeln eines Wechselaufsatzes (210), wobei das Werkzeug bzw. der Wechselaufsatz (210) eingerichtet ist gemäß der mindestens einen Tätigkeit;
• einen oder mehr als einen ersten Infrarotsensor (802s), welcher eingerichtet ist, ein, vorzugsweis elektromagnetisches, Handgerät-externes Ortungssignal zu erfassen;
eine Handgerät-externe Vorrichtung, aufweisend:
• eine Eingabeeinheit, eingerichtet zum Eingeben von Aktivierungsinformation für das Aktivieren des Trainierens der Maschine; und
• eine Ausgabeeinheit (110), eingerichtet zum Ausgeben der Aktivierungsinformation für das Aktivieren des Trainierens der Maschine (114).

## Claims

1. Hand-held device (100) for training at least one movement and at least one activity of a machine (114), the hand-held device (100) comprising:
• a handle (104);
• an input unit (108) configured to input activation information for activating the training of the machine (114);
• an output unit (110) configured to output the activation information for activating the training of the machine (114) to an apparatus external to the hand-held device;
• a coupling structure (102) for releasably coupling an interchangeable attachment (210) configured according to the at least one activity; and
**characterized in that** the hand-held device includes:
• one or more than one infrared sensor (802s) which is configured to detect a location signal external to the hand-held device.

2. Hand-held device (100) according to claim 1, wherein the output unit (110) comprises a wireless communication apparatus for communicating with the apparatus external to the hand-held device; and/or wherein the input unit (108) is configured to detect a handling of the hand-held device (100) when performing the activity.

3. Hand-held device (100) according to claim 1 or 2, wherein the activity relates to a sum of processes, and wherein information about the activity provided and/or recorded by the hand-held device comprises:
• a type of activity,
• spatial information that describes the spatial sequence of processes, and
• temporal information that is associated with the spatial information and that describes the duration of one of the processes.

4. Hand-held device (100) according to any of claims 1 to 3, further comprising:
a feedback unit (822, 824) which is configured to output feedback to a user of the hand-held device (100).

5. Hand-held device (100) according to any of claims 1 to 4, further comprising:
a mechanical sensor configured to detect a mechanical impact on the coupling structure or the interchangeable attachment, wherein the output unit is configured to output impact information about the detected mechanical impact to the apparatus external to the hand-held device.

6. Hand-held device (100) according to any of claims 1 to 5, further comprising:
one or more than one additional first sensor (802s) which is configured to detect spatial information about:
• a movement of the hand-held device (100) in space,
• a position of the hand-held device (100) in space, and/or
• an alignment of the hand-held device (100) in space.
wherein preferably the one or more than one additional first sensor (802s) comprises a motion sensor and/or a position sensor.

7. Hand-held device (100) according to any of claims 1 to 6, wherein the coupling structure (102) is configured to couple the interchangeable attachment (210) in a form-fitting manner; and/or wherein the coupling structure (102) is arranged on the front side of the hand-held device (100).

8. System (200, 700, 800, 1200), comprising:
• a hand-held device (100) according to any of claims 1 to 7, which further comprises an interface (842a, 843) which is configured to implement a function together with a circuit (852) of the interchangeable attachment (210); and
• the apparatus external to the hand-held device and/or the interchangeable attachment (210), wherein the interchangeable attachment (210) comprises the circuit (852) which is configured to provide the function;
wherein preferably the interchangeable attachment (210) comprises an end portion in the form of a tool (214) which represents the activity of the machine (114).

9. System (200, 700, 800, 1200) according to claim 8, further comprising:
at least one additional interchangeable attachment (210a to 210g),
wherein the additional interchangeable attachment is configured according to another activity which is different from the activity, and
wherein the additional interchangeable attachment (210a to 210g) and the interchangeable attachment (210) are configured in such a way that they can be exchanged for one another.

10. System (200, 700, 800, 1200) according to either of claims 8 or 9, wherein the apparatus external to the hand-held device comprises a data processing means (502) which is configured to determine control information for the machine (114) on the basis of the activation information and the activity,
wherein preferably the data processing means (502) comprises a communication interface which is configured according to a communication protocol of the machine (114); and wherein the data processing means is configured to communicate with the machine by means of the communication interface,
wherein further preferably the data processing means (502) is configured to transmit the control information to the machine (114) by means of the communication interface.

11. System (200, 700, 800, 1200) according to claim 10, further comprising:
a fastening apparatus which is configured to fasten the hand-held device to the machine,
wherein the data processing means (502) is further configured to perform a calibration sequence by controlling the machine (114) by means of the communication interface when the hand-held device is fastened to the machine by means of the fastening apparatus.

12. Method comprising:
• detecting spatial information of the hand-held device (100) according to any of claims 1 to 12 when the activation information has been input;
• determining control information for the machine (114) on the basis of the spatial information and the activity.

13. Nonvolatile storage medium comprising code segments configured, when executed by a processor, to perform the method according to claim 12.

14. Hand-held device (100) for training at least one movement and at least one activity of a machine (114), the hand-held device (100) comprising:
• a handle (104);
• an input unit (108) configured to input activation information for activating the training of the machine (114);
• an output unit (110) configured to output the activation information for activating the training of the machine (114) to an apparatus external to the hand-held device;
• a tool that is configured according to the at least one activity; and
**characterized in that** the hand-held device includes:
• one or more than one first infrared sensor (802s) which is configured to detect a preferably electromagnetic location signal external to the hand-held device.

15. System (200, 700, 800, 1200) for training at least one movement and at least one activity of a machine, comprising:
a hand-held device (100) (114) comprising:
• a handle (104);
• a tool or a coupling structure (102) for releasably coupling an interchangeable attachment (210), wherein the tool or the interchangeable attachment (210) is configured according to the at least one activity;
• one or more than one first infrared sensor (802s) which is configured to detect a preferably electromagnetic location signal external to the hand-held device;
an apparatus external to the hand-held device, comprising:
• an input unit configured to input activation information for activating the training of the machine; and
• an output unit (110) configured to output the activation information for activating the training of the machine (114).

## Revendications

1. Appareil portatif (100) pour l'entraînement d'au moins un mouvement et d'au moins une activité d'une machine (114), l'appareil portatif (100) présentant :
• une poignée (104) ;
• une unité d'entrée (108), configurée pour l'entrée d'informations d'activation pour l'activation de l'entraînement de la machine (114) ;
• une unité de transmission (110), configurée pour la transmission des informations d'activation pour l'activation de l'entraînement de la machine (114) vers un dispositif externe à l'appareil portatif ;
• une structure d'accouplement (102) pour l'accouplement de manière amovible à un embout interchangeable (210) conçu selon l'au moins une activité ; et **caractérisé en ce que** l'appareil portatif comprend :
• un ou plusieurs capteurs infrarouges (802s) qui sont configurés pour détecter un signal de localisation externe à l'appareil portatif.

2. Appareil portatif (100) selon la revendication 1, dans lequel l'unité de transmission (110) présente un dispositif de communication sans fil permettant de communiquer avec le dispositif externe à l'appareil portatif ; et/ou dans lequel l'unité de transmission (108) est configurée pour détecter une manipulation de l'appareil portatif (100) lors de la réalisation de l'activité.

3. Appareil portatif (100) selon la revendication 1 ou 2, dans lequel l'activité concerne une somme d'opérations, et dans lequel des informations concernant l'activité, lesquelles sont fournies et/ou enregistrées au moyen de l'appareil portatif, présentent :
• un type d'activité,
• des informations spatiales décrivant la séquence spatiale des opérations, et
• des informations temporelles associées aux informations spatiales et décrivant une durée de l'une des opérations.

4. Appareil portatif (100) selon l'une des revendications 1 à 3, présentant en outre :
une unité de rétroaction (822, 824) qui est configurée pour transmettre une rétroaction à un utilisateur de l'appareil portatif (100).

5. Appareil portatif (100) selon l'une des revendications 1 à 4, présentant en outre :
un capteur mécanique qui est configuré pour détecter une action mécanique sur la structure d'accouplement ou l'embout interchangeable, dans lequel l'unité de transmission est configurée pour transmettre des informations d'action concernant l'action mécanique détectée au dispositif externe à l'appareil portatif.

6. Appareil portatif (100) selon l'une des revendications 1 à 5, présentant en outre :
un ou plusieurs premiers capteurs supplémentaires (802s) qui sont configurés pour détecter des informations spatiales concernant :
• un déplacement de l'appareil portatif (100) dans l'espace,
• une position de l'appareil portatif (100) dans l'espace, et/ou
• une orientation de l'appareil portatif (100) dans l'espace.
dans lequel, de préférence, le ou les premiers capteurs supplémentaires (802s) présentent un capteur de mouvement et/ou un capteur de position.

7. Appareil portatif (100) selon l'une des revendications 1 à 6, dans lequel la structure d'accouplement (102) est conçue pour s'accoupler avec l'embout interchangeable (210) par complémentarité de forme ; et/ou dans lequel la structure d'accouplement (102) est disposée sur la face frontale de l'appareil portatif (100).

8. Système (200, 700, 800, 1200), présentant :
• un appareil portatif (100) selon l'une des revendications 1 à 7 qui présente en outre une interface (842a, 843) configurée pour mettre en œuvre une fonction conjointement avec un circuit (852) de l'embout interchangeable (210) et ;
• le dispositif externe à l'appareil portatif et/ou l'embout interchangeable (210), dans lequel l'embout interchangeable (210) présente le circuit (852) qui est configuré pour fournir la fonction ;
dans lequel, de préférence, l'embout interchangeable (210) présente une section d'extrémité sous la forme d'un outil (214) représentant l'activité de la machine (114).

9. Système (200, 700, 800, 1200) selon la revendication 8, présentant en outre :
au moins un embout interchangeable supplémentaire (210a à 210g), dans lequel l'embout interchangeable supplémentaire est conçu selon une autre activité qui est différente de l'activité, et
dans lequel l'embout interchangeable supplémentaire (210a à 210g) et l'embout interchangeable (210) sont conçus l'un par rapport à l'autre de telle sorte qu'ils peuvent être échangés l'un contre l'autre.

10. Système (200, 700, 800, 1200) selon l'une des revendications 8 ou 9, dans lequel le dispositif externe à l'appareil portatif présente une installation de traitement de données (502) qui est configurée pour déterminer des informations de commande pour la machine (114) sur la base des informations d'activation et de l'activité,
dans lequel, de préférence, l'installation de traitement de données (502) présente une interface de communication configurée selon un protocole de communication de la machine (114) ; et dans lequel l'installation de traitement de données est configurée pour communiquer avec la machine au moyen de l'interface de communication,
dans lequel en outre, de préférence, l'installation de traitement de données (502) est configurée pour transférer les informations de commande à la machine (114) au moyen de l'interface de communication.

11. Système (200, 700, 800, 1200) selon la revendication 10, présentant en outre :
un dispositif de fixation qui est conçu pour fixer l'appareil portatif à la machine,
dans lequel l'installation de traitement de données (502) est en outre configurée pour réaliser une séquence d'étalonnage en commandant la machine (114) au moyen de l'interface de communication lorsque l'appareil portatif est fixé à la machine au moyen du dispositif de fixation.

12. Procédé, présentant :
• la détection d'informations spatiales de l'appareil portatif (100) selon l'une des revendications 1 à 12 lorsque les informations d'activation ont été entrées ;
• la détermination d'informations de commande pour la machine (114) sur la base des informations spatiales et de l'activité.

13. Support de stockage non volatil, présentant des segments de code qui, lorsqu'ils sont exécutés par un processeur, sont configurés pour exécuter le procédé selon la revendication 12.

14. Appareil portatif (100) pour l'entraînement d'au moins un mouvement et d'au moins une activité d'une machine (114), l'appareil portatif (100) présentant :
• une poignée (104) ;
• une unité d'entrée (108), configurée pour l'entrée d'informations d'activation pour l'activation de l'entraînement de la machine (114) ;
• une unité de transmission (110), configurée pour la transmission des informations d'activation pour l'activation de l'entraînement de la machine (114) vers un dispositif externe à l'appareil portatif ;
• un outil qui est conçu selon l'au moins une activité ; et
**caractérisé en ce que** l'appareil portatif comprend :
• un ou plusieurs premiers capteurs infrarouges (802s) qui sont configurés pour détecter un signal de localisation externe à l'appareil portatif, de préférence électromagnétique.

15. Système (200, 700, 800, 1200) pour l'entraînement d'au moins un mouvement et d'au moins une activité d'une machine, présentant :
un appareil portatif (100) (114), présentant :
• une poignée (104) ;
• un outil ou une structure d'accouplement (102) pour l'accouplement de manière amovible à un embout interchangeable (210), dans lequel l'outil ou l'embout interchangeable (210) est conçu selon l'au moins une activité ;
• un ou plusieurs premiers capteurs infrarouges (802s) qui sont configurés pour détecter un signal de localisation externe à l'appareil portatif, de préférence électromagnétique ;
un dispositif externe à l'appareil portatif, présentant :
• une unité d'entrée, configurée pour l'entrée d'informations d'activation pour l'activation de l'entraînement de la machine ; et
• une unité de transmission (110), configurée pour la transmission des informations d'activation pour l'activation de l'entraînement de la machine (114).
